# EUROPÄISCHE PATENTSCHRIFT

(11) **EP 0 019 728 B1**
(45) Veröffentlichungstag und Bekanntmachung des Hinweises auf die Patenterteilung: **12.01.1983**
(21) Anmeldenummer: 80102273.2
(22) Anmeldetag: 26.04.1980
(51) Int. Cl.: D06P 3/85, D06P 1/382, D06P 3/66, C09B 62/04

(54) **Verwendung von Reaktivfarbstoffen zum Färben und Bedrucken von Mischgeweben aus Polyester/Baumwolle**
Utilisation of reactive dyestuffs in dyeing and printing blended fabrics polyester/cotton
Utilisation de colorants réactifs pour la teinture et l'impression de tissus mixtes polyester/coton

(30) Priorität: 10.05.1979 DE 2918881
(43) Veröffentlichungstag der Anmeldung: 10.12.1980
(73) Patentinhaber: BAYER AG, 51368 Leverkusen (DE)
(72) Erfinder: Harms, Wolfgang, Dr., D-5090 Leverkusen 1 (DE); Kuth, Robert, Dr., D-5000 Köln 41 (DE); Neeff, Rütger, Dr., D-5090 Leverkusen 1 (DE); Wunderlich, Klaus, Dr., D-5090 Leverkusen 1 (DE)

## Beschreibung

Die vorliegende Erfindung betrifft die Verwendung von einem von wasserlöslich machenden Gruppen freien Reaktivfarbstoff der Formel 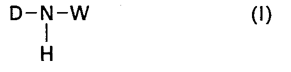 worin 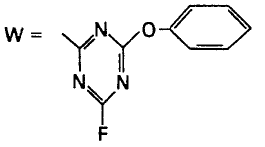 D = Rest eines organischen Farbstoffs, wobei der Rest 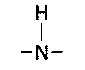 direkt oder über ein Brückenglied an ein Ring-C-Atom von D gebunden ist, zum Färben und Bedrucken von Mischgeweben aus Polyester/Baumwolle.

Geeignete Reste D der Formel I sind beispielsweise solche von Azo-, Anthrachinon-, Azomethin-, Chinophthalon-, Nitro-, Phthaloperinon-und Indigofarbstoffen.

Ein für die in Rede stehende Verwendung geeigneter Farbstoff ist beispielsweise ein solcher der Formel 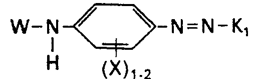 oder 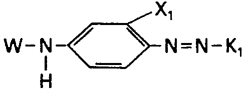 mit
X = Substituent oder H,
X₁ = H, No₂, Halogen, insbesondere CI oder Br, CN 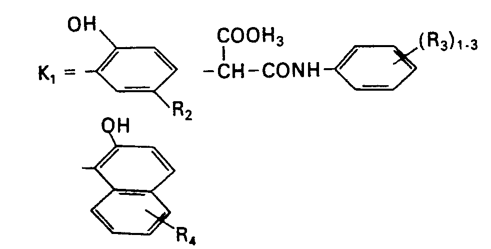 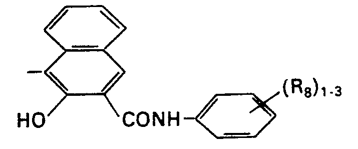 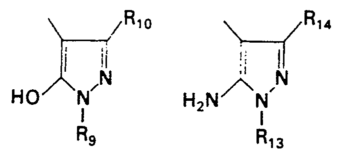 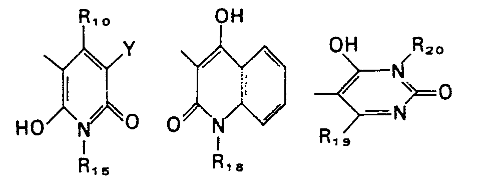 R₂₁ 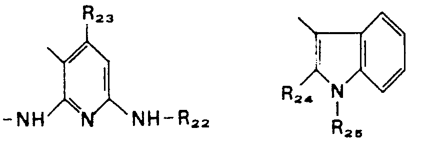 mit folgenden Substituentenbedeutungen:
R₂ = Alkyl, Phenyl, Cyclohexyl,
R₃ = H, Alkyl, Alkoxy, Halogen, insbesondere Cl,
R₄ = H, Sulfonamido, insbesondere 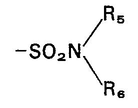
mit
R₅, R₆ = H, Alkyl, Aralkyl, Aryl oder Carbonestergruppe, insbesondere -COOR₇ mit
R₇ = Alkyl, Aralkyl,
R₈ = H, Alkyl, Alkoxy, Halogen, insbesondere Cl,
R₉ = H, Alkyl, Aryl,
R₁₀= Alkyl, insbesondere CH₃; Carbonester, insbesondere -COO-Alkyl, Carbonamido, insbesondere 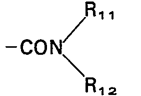
CN,
R₁₁, R₁₂= H, Alkyl, Aralkyl,
R₁₃= H, Alkyl, Aralkyl, Aryl,
R₁₄= H, Alkoxy oder R₁₀
R₁₅ = H, Alkyl,
R₁₆ = H, OH, Alkyl, insbesondere CH₃,
Y = CN, Carbonamido, insbesondere CONHR₁₇,
R₁₇ = H, Alkyl, Aryl,
R₁₈= H, Alkyl,
R₁₉ = OH, NH₂,
R₂₀ = Alkyl, Aryl,
R₂₁ = H, Alkyl,
R₂₂ = Alkyl, Aralkyl,
R₂₃ = H, Alkyl oder -NHR₂₂,
R₂₄, R₂₅ = H, Alkyl, Aryl,

wobei W die oben angegebene Bedeutung besitzt.

Weiter geeignet ist ein Farbstoff der Formel 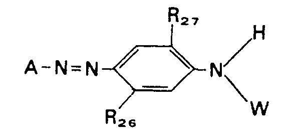 worin
A = Rest einer Diazokomponente,
R₂₆ = H, Alkyl, Alkoxy, Halogen, insbesondere Cl, Acylamino,
R₂₇ = H, Alkyl, Alkoxy, Halogen, insbesondere Cl, und wobei W die oben angegebene Bedeutung besitzt.

Weiterhin geeignet ist ein Farbstoff einer der folgenden Formeln a bis i, wobei W die oben angegebene Bedeutung besitzt: 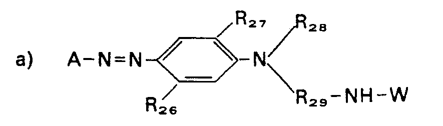 worin R₂₆ und R₂₇ die oben angegebene Bedeutung besitzen,
R₂₈ = H, Alkyl, Aralkyl,
R₂₉ = Brückenglied, insbesondere C₂ bis C₆-Alkylen und -CH₂-CH₂, 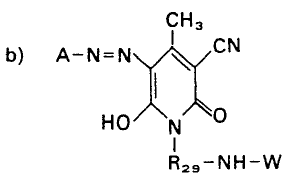 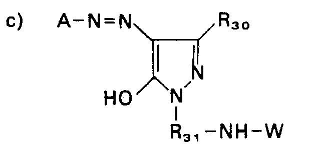 worin
R₂₉ = Brückenglied, insbesondere C₂ bis C₆-Alkylen,
R₃₀= Alkyl, insbesondere CH₃, Carbonester, insbesondere COO-Alkyl, Carbonamido, insbesondere 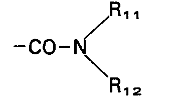 wobei R₁₁ und R₁₂ die in Anspruch 2 angegebene Bedeutung besitzen, und
R₃₁ = Arylen, Alkylen, insbesondere C₂ bis C₆-Alkylen, 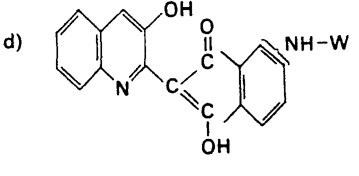 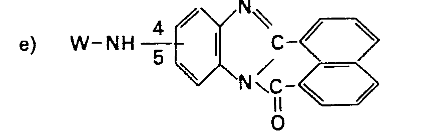 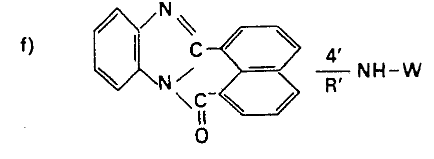 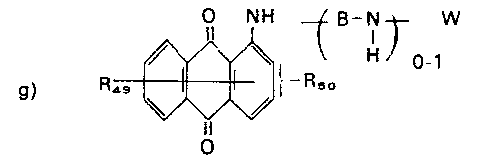 worin R₄₉ vorzugsweise in 4- oder 5-Stellung steht, und
R₄₉ = H, NH₂, Alkylcarbonylamino, Arylcarbonylamino, Alkylamino, Cycloalkylamino, Arylamino, OH, Alkoxy, Arylthio, Nitro,
R₅₀ = H, Alkoxy, Aryloxy, Nitro, Halogen, Cyan, Alkylsulfonyl, Arylsulfonyl, Alkylcarbonyl, Arylcarbonyl, Alkoxycarbonyl, Alkoxysulfonyl, Aralkoxysulfonyl, Aryloxysulfonyl,
B = Brückenglied, vorzugsweise Alkylen oder Arylen der Formel 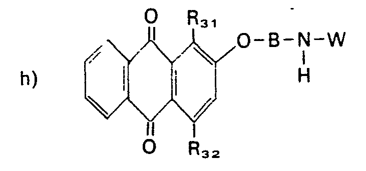 worin
R₅₁ = NH₂, OH,
R₃₂ = NH₂, Alkylamino, Cycloalkylamino, Aralkylamino, Arylamino, OH, Alkylsulfonylamino, Aralkylsulfonylamino, Arylsulfonylamino, Alkylcarbonylamino, Aralkylcarbonylamino, Arylcarbonylamino, 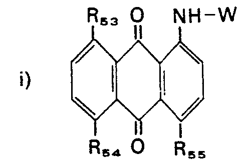 worin
R₅₃-R₅₅ = H, OH, NH₂, Alkylamino, Arylamino, Arylthio.

Die in den Publikationen DE-OS Nrn. 2703398, DE-OS 2600490, CH-PS 510089 und DE-OS 1794315 aufgeführten Farbstoffe enthalten im allgemeinen löslichmachende Gruppen im Molekül, so dass ihr Einsatz zum Ton-in-Ton-Färben oder Bedrucken von Baumwoll/Polyester-Fasern nicht möglich erscheint. Dieses Ton-in-Ton-Färben oder -Bedrucken von Baumwolle/Polyester-Mischfasern mit nur einem Farbstoff ist jedoch mit den erfindungsgemässen Verbindungen in relativ einfacher Weise und mit sehr gutem Ergebnis zu bewerkstelligen. Gegebenenfalls werden zu diesem Zweck Quellmittel den Färbepräparationen zugesetzt.

Die für die erfindungsgemässe Verwendung geeigneten Farbstoffe erhält man
1) durch Umsetzung von Farbstoffen D-NH₂ mit 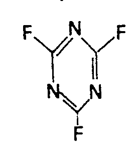 zu 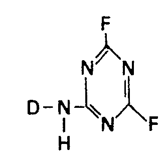 und folgende Reaktion mit

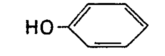

Die Kondensationsreaktionen können in organischen Lösungsmitteln, wie Aceton, Acetonitril, Benzol, Toluol, Xylolen, Nitrobenzol, chlorierten Kohlenwasserstoffen, Dimethylformamid, Formamid, N-Methylpyrrolidon, Tetramethylensulfon, Dioxan, Tetrahydrofuran und ähnlichen, in Anwesenheit säurebindender organischer Basen, wie beispielsweise N,N-Dimethylanilin, N,N-Diethylanilin, Trimethylamin, Triethylamin, N,N-Dimethylcyclohexylamin, Diazabicyclooctan und ähnlichen, vorgenommen werden;
2) durch Umsetzung von D-NH₂ mit 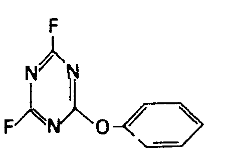
3) durch Halogenaustausch aus Farbstoffen der Formel 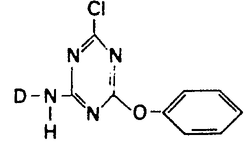 mittels Alaklifluoriden in organischen Lösungsmitteln, wie Tetramethylensulfon, N-Methylpyrrolidon, Dimethylformamid, Nitrobenzol und ähnlichen;
4) im Falle von Azofarbstoffen durch Kupplung diazotierter Amine mit Kupplungskomponenten, wobei Diazo- und/oder die Kupplungskomponente, eine Gruppe 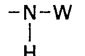 enthalten.

Geeignete Farbstoffe der Formel D-NH₂ sind
1 -Aminoanthrachinon
1,4-Diaminoanthrachinon
1,5-Diaminoanthrachinon
1,8-Diaminoanthrachinon
1-Amino-4-benzoylaminoanthrachinon
1-Amino-5-benzoylaminoanthrachinon
1-Amino-5-acetylaminoanthrachinon
1-Amino-8-benzoylaminoanthrachinon
1-Amino-4-methylaminoanthrachinon
1-Amino-4-äthylaminoanthrachinon
1-Amino-4-isopropylaminoanthrachinon
1-Amino-4-cyclohexylaminoanthrachinon
1-Amino-4-(4'-methylphenylamino)-anthrachinon
1-Amino-4-(4'-methoxyphenylamino)-anthrachinon
1-Amino-4-acetylaminoanthrachinon
1-Amino-4-phenylaminoanthrachinon
1 -Amino-4- (3'-aminophenylamino) - anthrachinon
1-Amino-4-(4'-aminophenylamino)-anthrachinon
1-(3'-Aminophenylamino)anthrachinon
1-(4'-Aminophenylamino)anthrachinon
1-Methylamino-4-(3'-aminophenylamino)-anthrachinon
1-Methylamino-4-(4'-aminophenylamino)-anthrachinon
1-Äthylamino-4-(3'-aminophenylamino)-anthrachinon
1-Isopropylamino-4-(3'-aminophenylamino)-anthrachinon
1-Isopropylamino-4-(4'-aminophenylamino)-anthrachinon
1-sec.-Butylamino-4-(3'-aminophenylamino)-anthrachinon
1-n-Butylamino-4-(4'-aminophenylamino)-anthrachinon
1 -Isobutylamino-4-(3'-aminophenylamino)-anthrachinon
1-Isopropylamino-4-(4'-methylaminoanilino)-anthrachinon
1-Methylamino-4-(3'-aminomethyl-4'-methylphenylamino)anthrachinon
1-Isopropylamino-4-(3'-methylaminomethyl-4'-methoxyphenylamino)anthrachinon
1-Äthylamino-4-(4'-methylaminomethyl- phenylamino)anthrachinon
1 -Cyclohexylamino-4-(3'-aminophenylamino)-anthrachinon 1-Amino-4-hydroxyanthrachinon
1 -Amino-4-methoxyanthrachinon
1-Amino-4-(ß-methoxyäthoxy)anthrachinon
1,4-Diamino-2-phenoxyanthrachinon
1,4-Diamino-2-methoxyanthrachinon
1,4-Diamino-2-(ß-methoxyäthoxy)anthrachinon
1,4-Diamino-2-bromanthrachinon
1,4-Diamino-2-chloranthrachinon
1,4-Diamino-2-methylanthrachinon
1,4-Diamino-2-nitroanthrachinon
1,4-Diamino-2-cyananthrachinon
1,4-Diamino-2-acetylanthrachinon
1,4-Diamino-2-formylanthrachinon
1,4-Diamino-2-sulfophenoxyanthrachinon
1,4-Diamino-2-methylsulfonylanthrachinon
1,4-Diaminoanthrachinon-2-carbonsäuremethylester
5-Aminotiazolanthron
1,4-Diamino-2-(4'-aminophenoxy)anthrachinon
1,4-Diamino-2-(3'-aminophenoxy)anthrachinon
1,4-Diamino-2-sulfo-(3'-aminophenoxy)-anthrachinon
1,4-Diamino-5-nitroanthrachinon
1-Amino-4-hydroxy-2-(4'-aminophenoxy)-anthrachinon
1-Amino-4-hydroxy-2-(3'-aminophenoxy)-anthrachinon
1-Amino-4-hydroxy-2-[ß-(4'-aminophenoxy)-äthoxy]anthrachinon
1-Amino-4-hydroxy-2-[β-(phenylamino)-äthoxy]anthrachinon
1-Amino-4-hydroxy-2-(4'-aminomethylphen- oxy)anthrachinon
1-(4'-Aminophenylamino)-4-hydroxy- anthrachinon
1-(3'-Aminophenylamino)-4-hydroxy- anthrachinon
3,4- Phthalo-2-aminoacridon
1,5-Diamino-4,8-dihydroxyanthrachinon
1,8-Diamino-4,5-dihydroxyanthrachinon
1-Amino-4,8-dihydroxy-5-(4'-methylphenyl- amino)anthrachinon
1-Amino-4,5-dihydroxy-8-(4'-methylphenyl- amino)anthrachinon
1-Amino-4,8-dihydroxy-5-phenylamino- anthrachinon
1-Amino-4,5-dihydroxy-8-(4'-methoxyphenyl- amino)anthrachinon
1-Amino-4,8-dihydroxy-5-isopropylamino- anthrachinon
1-Amino-4,5-dihydroxy-8-isopropylamino- anthrachinon
1-Amino-4,8-dihydroxy-5-methylamino- anthrachinon
1-Amino-4,5-dihydroxy-8-methylamino- anthrachinon
1-Amino-5-methylaminoanthrachinon
1-Amino-5-isopropylaminoanthrachinon
5-Amino-1,4-bis-(4'-methylphenylamino)-anthrachinon
5-Amino-1,4-bis-isopropylaminoanthrachinon
1-Amino-4-chlor-5,8-bis-isopropylamino- anthrachinon
1-Amino-4-chlor-5,8-bis-(4'-methylphenyl- amino)anthrachinon
1-Amino-5-methoxyanthrachinon
1-Amino-8-methoxyanthrachinon
1-Amino-5-(β-methoxyäthoxy)-anthrachinon
1-Amino-5-nitroanthrachinon
1-Amino-8-nitroanthrachinon
1-Amino-6/7-nitroanthrachinon/Iso- merengemisch
1,4-Diaminoanthrachinon-2,3-dicarbonsäure- (3'-aminophenylimid)
1-(β-Aminoäthylamino)-4-(4'-methyl- phenylamino)anthrachinon
1-Amino-4-(3'-aminophenylamino)-2-methoxyanthrachinon
1-Amino-4-(4'-aminophenylamino)-2-phenoxyanthrachinon
1-Amino-4-(4'-methylaminomethylphenyl- amino) -2-phenoxyanthrachinon
1 -Amino-2-methoxy-4- (4'-methylamino- methylphenylamino)anthrachinon
5-Amino-1,4-bis-phenylmercapto- anthrachinon.

Weitere geeignete Farbstoffe der Formel D-N H ₂ sind
4'-Amino-2-nitrodiphenylamin-4-sulfonsäure-N,N-dimethylamid
4'-Amino-2-nitrodiphenylamin-4-sulfonsäure-N-methylamid
4'-Amino-2-nitrodiphenylamin-4-sulfonsäure-N-äthylamid
3'-Amino-2-nitrodiphenylamin-4-sulfonsäure-N-hydroxyäthylamid
4'-Amino-2-nitrodiphenylamin-4-sulfonsäure-N-phenylamid
4'-Amino-2-nitrodiphenylamin-4-sulfonsäure-N-methylanilid
4'-Amino-2-nitro-4-methylsulfonyldiphenylamin
4'-Amino-2-nitro-4-äthylsulfonyldiphenylamin
2-Nitrodiphenylamin-4-sulfonsäure-N-(4"- aminophenylamid)
4'-Methyl-2-nitrodiphenylamin-4-sulfonsäure-N-(3"-aminophenylamid)
4'-Methoxy-2-nitrodiphenylamin-4-sulfonsäure-N-(β-aminoäthylamid)
2-Nitrodiphenylamin-4-sulfonsäure-N-(β-aminoäthylamid)
2-Nitro-4'-methoxydiphenylamin-4-sulfon säure-N-(4"-aminophenylamid)
2-Nitro-4'-methoxydiphenylamin-4-sulfonsäure-N-(3"-aminophenylamid)
2-Nitro-2'-methoxydiphenylamin-4-sulfonsäure-N-(4"-aminophenylamid)
4'-Amino-2,4-dinitrodiphenylamin
3'-Amino-2,4-dinitrodiphenylamin
2-Nitro-4'-acetylaminodiphenylamin-4-sulfonsäure- (4"-aminophenylamid)
2-Nitro-4'-acetylaminodiphenylamin-4-sulfonsäure-N-(β-aminoäthylamid).

Von besonderem Interesse ist die erfindungsgemässe Verwendung für das kontinuierliche Färben und Bedrucken von Baumwoll/Polyester-Mischfasern, da es ein Ton-in-Ton-Färben bzw. -Drukken in einstufiger Arbeitsweise ermöglicht. Gegebenenfalls können übliche nichtreaktive Dispersionsfarbstoffe mitverwendet werden. Vorzugsweise wird dabei in neutralem Medium unter Verwendung der bekannten Hilfsmittel (Farbstofflösungsmittel bzw. Quellmittel) gearbeitet, wie sie beispielsweise in der deutschen Auslegeschrift Nr.1811796 sowie den deutschen Offenlegungsschriften Nrn. 2524243, 2528743 und 2751830 beschrieben sind (vorzugsweise Polyglykole), und die in Mengen von etwa 10 bis 100 g/kg Klotzflotte bzw. Druckpaste eingesetzt werden.

Besonders gute Ergebnisse erhält man bei Mitverwendung von organischen Fixierhilfsmitteln (Säurefängern). Geeignete Fixierhilfsmittel, die vorzugsweise in Mengen von 5 bis 50 g/kg Klotzflotte bzw. Druckpaste eingesetzt werden, sind Mono- und Polyepoxide, insbesondere die Umsetzungsprodukte aliphatischer Alkohole oder Polyole mit Epichlorhydrin. Beispielhaft genannt seien Umsetzungsprodukte von Alkylglykolen, Monoalkyläthern von Polyglykolen oder von Polyglykolen, wie 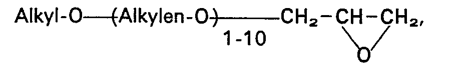 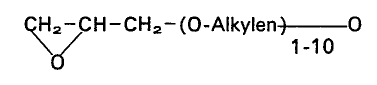 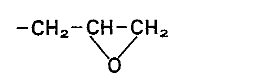 mit Alkyl = C₁ bis C₄-Alkyl und Alkylen = C₂ bis C₄-Alkylen, wie sie beispielsweise in der deutschen Patentanmeldung Nr. 2838274 beschrieben sind.

Mit den neuen reaktiven Farbstoffen erhält man Färbungen und Drucke, deren Farbtöne auf den Mischfasern gut übereinstimmen. Sie zeichnen sich durch sehr gute Echtheiten aus, wobei neben derSublimier-, Licht- und Trockenreinigungsechtheit besonders die Nassechtheiten hervorzuheben sind.

Während bei den oben erwähnten Verfahren mit ausgesuchten Dispersionsfarbstoffen die Farbstoffe der Cellulosefärbungen z.B. mit N-Methylpyrrolidon vollständig extrahierbar sind, sind die Färbungen mit den neuen reaktiven Dispersionsfarbstoffen gegenüber dem Extraktionsmittel beständig, da sie eine kovalente Bindung mitder Cellulosefaser eingegangen sind.

Die praktisch wasserunlöslichen neuen reaktiven Dispersionsfarbstoffe werden vor dem Färben bzw. Drucken zweckmässigerweise unter Einsatz von üblichen Hilfsmitteln in eine solche Form überführt, dass sie beim Verdünnen mit Wasser eine feinverteilte Dispersion bilden. Diese Farbstoffzubereitungen können neben Wasser übliche Bestandteile, wie Dispergiermittel, z.B. nichtionogene und/oder anionische und/oder kationische Dispergiermittel, Verdickungsmittel und/oder Quellmittel und/oder Farbstofflösungsvermittler enthalten.

Das Färben wird in der Weise vorgenommen, dass man die Cellulosefasern enthaltenden Textilmaterialien mit den wässerigen Klotzflotten in üblicher Weise imprägniert, auf eine Gewichtszunahme von 40 bis 100% abquetscht und gegebenenfalls nach einer kurzen Zwischentrocknung - einer 30 bis 90 s währenden thermischen Behandlung von 190 bis 230°C unterwirft.

Zum Bedrucken werden die Druckpasten unter Verwendung der für Reaktivfarbstoffe üblichen Verdickungsmittel wie Alginate hergestellt. Die Farbstoffe werden auf den bedruckten Textilmaterialien entweder durch eine 1 bis 2minütige Behandlung mittels Trockenhitze von 180 bis 230° C oder durch ein 2 bis 15minütiges Dämpfen bei 170 bis 210° C fixiert.

Die in den nachfolgenden Beispielen genannten Teile sind Gewichtsteile und die Grade Celsiusgrade.

### Beispiel 1

25 Teile 1-Amino-2-(4'-aminophenoxy)-4-hy- droxyanthrachinon werden in 75 Teilen Dimethylformamid gelöst. Man kühlt auf 0 bis 5° ab und lässt 9,5 Teile 2,4,6-Trifluortriazin innerhalb von 10 min zutropfen. Nach 15 min langem Nachrühren zeigt eine Probe im Chromatogramm eine vollständige Umsetzung des Einsatzproduktes.

Man gibt nun 7,7 Teile Phenol zur Suspension des 2,4-Difluor-6-triazinylaminofarbstoffes und lässt anschliessend im Laufe von 1 h bei 0 bis 5° 15,7 Teile Triäthylamin zutropfen. Nach 2stündigem Nachrühren ist die Kondensationzwischen Difluortriazinylaminofarbstoff und Phenol beendet. Man tropft die erhaltene Lösung in 200 Teile Wasser ein, saugt den ausgefällten Farbstoff der Formel 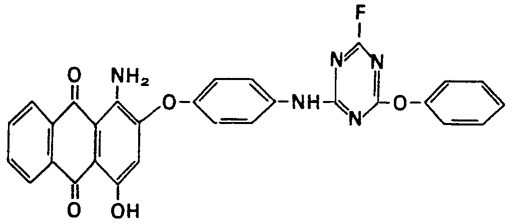 ab und wäscht ihn mit Wasser. Nach Trocknung bei 50° im Umluftschrank erhält man ein dunkelrotes Pulver.

### Beispiel 2

20,6 Teile 1-Amino-4,8-dihydroxy-5-(4'-methylphenylamino)anthrachinon werden in 100 Teilen Nitrobenzol und 8,7 Teilen N,N-Dimethylanilin bei 20° suspendiert. Man lässt 10,1 Teile 2,4,6-Trifluortriazin in 10 min zutropfen und saugt den entstandenen 2,4-Difluor-6-triazinylamino- farbstoff nach 4stündigem Rühren ab. Der Filterkuchen wird mit 50 Teilen Nitrobenzol, anschliessend mit Methanol gewaschen und bei 40° im Umluftschrank getrocknet.

21 Teile des erhaltenen Produktes werden in 80 Teilen Nitrobenzol suspendiert. Man gibt 4,5 Teile Phenol hinzu, lässt zu der Suspension 4,8 Teile Triäthylamin zutropfen und erwärmt den Ansatz 10 h auf 35 bis 40°. Nach beendeter Umsetzung wird der Niederschlag abgesaugt, mit 2x30 Teilen Nitrobenzol und anschliessend mit Methanol gewaschen, bis der Ablauf farblos ist. Nach Trocknung im Umluftschrank bei 50° fällt der Farbstoff der Formel 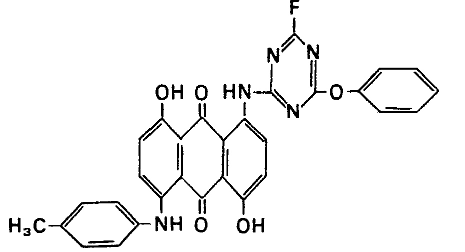 als blaues, mikrokristallines Pulver an.

### Beispiel 3

a) 30Teile des nach Beispiel 1 erhaltenen Farbstoffes werden mit 15 Gewichtsteilen eines Umsetzungsproduktes von Abietinsäure mit ca. 50 mol Äthylenoxid sowie 55 Teilen Wasser mit Hilfe einer Perlmühle feindispergiert. Aus dieser Farbstofformierung wird die folgende Färbeflotte bereitet:
   50 Teile Farbstoffzubereitung
   20 Teile der Epoxyverbindung der Formel 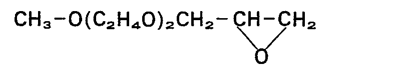 30 Teile eines Polyäthylenglykols vom MG400 10 Teile einer 10%igen wässerigen Lösung eines Polyacrylats und
   890 Teile Wasser
   1000 Teile
b) Man imprägniert mit Hilfe eines Foulards eine Polyester/Baumwoll-Mischfaser mit einem Verhältnis von Polyester zu Baumwolle von 67 zu 33, wobei die Flottenaufnahme des Gewebes ca. 60% beträgt. Das so behandelte Gewebe wird getrocknet und der Farbstoff auf beiden Fasern durch eine Heissluftbehandlung in einer Thermosolanlage bei 215° während 60 s fixiert. Nach der üblichen seifenden Nachbehandlung nahe Kochtemperatur erhält man nach dem Trocknen einen volien roten Farbton, der auf beiden Faseranteilen eine sehr gute Übereinstimmung im Farbton ergibt. Die hergestellte Färbung zeigt gute Tageslichtechtheit, Trocknen- und Nassreibechten sowie hervorragende Nassechtheiten.
c) Verwendet man anstelle des Polyester/ Baumwoll-Mischgewebes ein Gewebe aus reiner Baumwolle oder ein Mischgewebe aus Polyamid/ Baumwolle, so erhält man nach dem Fixieren und Waschen ebenfalls egale tiefe Rotfärbungen mit guten Echtheiten.

### Beispiel 4

a) 200 bis 300 Teile des in Beispiel 2 beschriebenen Farbstoffes werden mit 60 bis 90 Teilen eines üblichen nichtionogenen Dispergiermittels zusammengegeben, mit Wasser auf 1000 Teile aufgefüllt und in einer Kugelmühle oder einem anderen geeigneten Gerät dispergiert. Um ein zu rasches Eintrocknen zu verhindern, kann man der Flüssigeinstellung noch etwas Glykol oder Glycerin sowie etwas Konservierungsmittel zusetzen.
b) Ein Gewebe aus Polyester/Baumwolle 50:50 wird mit einer Druckpaste, bestehend aus 1 bis 50 Teilen der Farbstoffzubereitung aus a 100 Teilen Glycidylverbindung der Formel 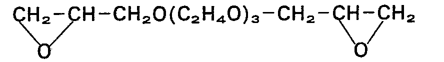
   50 Teilen Polyäthylenglykol
   399 bis 350 Teilen Wasser
   500 Teilen einer 10%igen Guarmehlverdickung bedruckt, wobei man eine Rotationsfilmdruck-Maschine oder Filmdruck-Tische verwendet. Anschliessend wird getrocknet, 1 min bei 210° mit Trockenhitze fixiert, gespült, geseift, kochend gespült und getrocknet.

Man erhält einen auf beiden Materialien tongleichen, blauen Druck mit ausgezeichneten Nassechtheiten und guten Allgemeinechtheiten.

c) Wird ein reines mercerisiertes Baumwollgewebe, wie unter b beschrieben, bedruckt und nachbehandelt, so erhält man in sehr hohen Fixierausbeuten einen blauen Druck mit sehr guten Echtheiten.

### Beispiel 5

89,2 Teile 1-Aminoanthrachinon werden in 500 Teilen Nitrobenzol und 100 Teilen Dimethylformamid suspendiert. Man lässt 60 Teile 2,4,6-Trifluortriazin in 10 min zutropfen, wobei die Temperatur auf 40 bis 45° ansteigt. Man rührt 15 min nach und hält dann die Temperatur noch 30 min bei 55 bis 60°. Man kühlt auf 30° ab. Zur Suspension des entstandenen Difluortriazinylaminoanthrachinons gibt man 47 Teile Phenol und lässt nun 50,5 Teile Triäthylamin in 10 min zutropfen. Dabei steigt die Temperatur auf 48°. Anschliessend wird der Ansatz noch 30 min bei 55 bis 60° gehalten. Nach Zugabe von 600 Teilen Methanol kühlt man auf 20° ab, saugt ab und wäscht den Filterkuchen mit Methanol bis zum schwach gelben Ablauf. Der Farbstoff der Formel 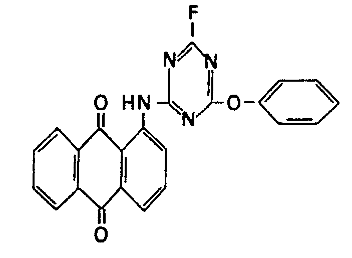 wird bei 50° im Umluftschrank getrocknet. Er liefert nach den Verfahren der Beispiele 3 und 4 auf Polyester/Baumwoll-Mischfasern tongleiche Gelbfärbungen mit ausgezeichneten Echtheiten.

### Beispiel 6

Ein Mischgewebe, bestehend aus 50 Teilen Zellwolle und 50 Teilen Polyamid, wird mit einer wässerigen Druckpaste bedruckt, die in 1000 Teilen
40 Teile des formierten Reaktivdispersionsfarbstoffes aus Beispiel 5
40 Teile Glycidylverbindung der Formel 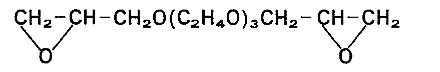
550 Teile 4%ige wässerige Alginatverdickung enthält. Nach dem Trocknen bei 80° wird das Gewebe anschliessend 12 min mit überhitztem Dampf von 180° gedämpft. Nach gründlichem Spülen mit kaltem und warmem Wasser wird das Gewebe dann 20 min mit einer Lösung, die in 1000 Teilen 1 Teil eines handelsüblichen Paraffinsulfonates und 0,5 Teile Soda enthält, kochend geseift, abgesäuert mit Essigsäure, mit kaltem Wasser gespült und getrocknet.

Man erhält in ausgezeichneter Farbstoffausbeute einen gelben Druck mit sehr guter Ton-in-Ton-Färbung beider Faserkomponenten und ausgezeichneten Nassechtheiten.

### Beispiel 7

10,0 Teile 4'-Amino-3-hydroxychinophthalon werden in 100 Teilen Nitrobenzol suspendiert. Man versetzt die Lösung bei 20° mit 4,8 Teilen N,N-Dimethylanilin und lässt in 10 min 5,4 Teile 2,4,6-Trifluortriazin gleichmässig zutropfen. Nach 2stündigem Nachrühren ist die Kondensation zwischen Cyanurfluorid und Aminochinophthalon beendet. Man gibt 4,6 Teile Phenol zu der Suspension, tropft innerhalb von 15 min 4,8 Teile Triäthylamin zu, rührt 2 h bei 20° und erwärmt dann noch 1 h zurVervollständigung der Umsetzung auf 40°.

Man kühlt die Suspension unter Rühren ab, saugt bei 20° ab und wäscht den Filterkuchen mit Methanol bis zum schwach gelben Ablauf.

Nach Trocknung bei 50° im Umluftschrank erhält man den Farbstoff der Formel 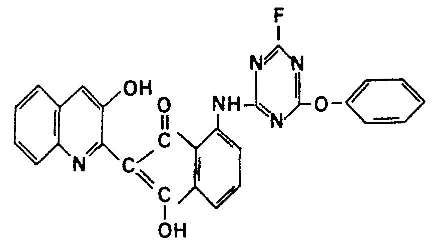 der nach den Verfahren der Beispiele 3 und 4 auf Polyester/Baumwoll-Mischgeweben tongleiche, klare Gelbfärbungen mit ausgezeichneten Echtheiten ergibt.

Einen sehr ähnlichen Farbstoff erhält man, wenn man anstelle des 4'-Aminochinophthalons äquivalente Mengen eines Gemisches von 3'- und 4'-Aminochinophthalon einsetzt.

### Beispiel 8

47,8 Teile 1 -Amino-4-hydroxyanthrachinon werden in 250 Teilen Nitrobenzol und 50 Teilen Dimethylformamid suspendiert. Man lässt 29,7 Teile 2,4,6-Trifluortriazin in 10 min zutropfen und lässt die Temperatur auf 50° ansteigen. Man rührt dann noch 15 min bei 60° nach, kühlt auf 20° ab und setzt 28,3 Teile Phenol zu. Anschliessend werden 30,3 Teile Triäthylamin tropfenweise in 15 min zugegeben; dabei lässt man die Temperatur auf 30° ansteigen, anschliessend erwärmt man den Ansatz 15 min auf 60°, worauf die Kondensation zwischen Difluortriazinylaminoanthrachinon und Phenol beendet ist. Man kühlt ab, verdünnt die Mischung mit 300 Teilen Methanol, saugt die Fällung ab und wäscht sie mit Methanol. Nach Umlufttrocknung bei 60° erhält man einen Farbstoff 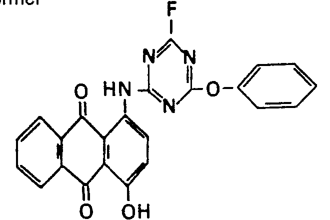 der auf Polyester/Baumwoll-Mischfasern nach den Verfahren der Beispiele 3 und 4 tongleiche, sehr echte Färbungen in rotstichigen Orangetönen ergibt.

### Beispiel 9

125,6 Teile 1-Amino-4-phenylaminoanthra- chinon werden in 650 Teile Nitrobenzol und 100 Teile Dimethylformamid eingetragen. Zu der Mischung lässt man 60 Teile 2,4,6-Trifluortriazin in 5 min zutropfen, wobei die Temperatur auf etwa 45° ansteigt. Man erwärmt noch 30 min auf 55° und kühlt dann auf 30° ab. Man trägt nun 56,6 Teile Phenol in das Reaktionsgemisch ein und lässt anschliessend 60,6 Teile Triäthylamin in 10 min zutropfen. Dabei steigt die Temperatur auf etwa 45° an; man erwärmt anschliessend 30 min auf 60 bis 65°, verdünnt die Mischung mit 1000 Teilen Methanol, saugt den ausgefallenen Farbstoff bei 20° ab, wäscht ihn mit Methanol und trocknet ihn bei 60° im Umluftschrank. Er ent- 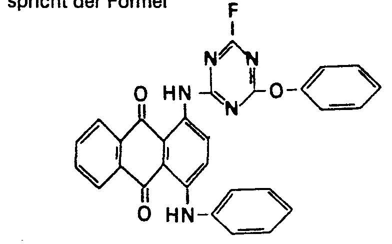 und gibt auf Polyester/Baumwoll-Mischungen nach den Färbe- und Druckverfahren der Beispiele 3 und 4 tongleiche blaue Färbungen mit sehr guten Echtheiten.

### Beispiel 10

30,8 Teile 1-Amino-4,8-dihydroxy-5-iso- propylaminoanthrachinon werden in 300 Teile Nitrobenzol und 60 Teile Dimethylformamid eingetragen. Man tropft zu der Mischung in 10 min 14,2 Teile 2,4,6-Trifluortriazin hinzu und lässt dabei die Temperatur auf ca. 35° ansteigen. Man hält die Temperatur noch weitere 15 min und erwärmt den Ansatz dann auf 50°. Nach Beendigung der Umsetzung kühlt man auf 20° ab, lässt 400 Teile Methanol zulaufen, rührt 1 h nach, saugt ab und wäscht den Filterkuchen mit Methanol. Nach Trocknung bei 50° erhält man 34,8 Teile eines Produktes der Formel

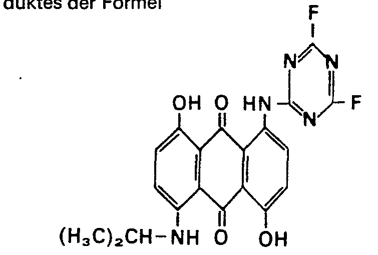

17 Teile obigen Difluortriazinylamino-Zwischenproduktes werden in 200 Teilen Nitrobenzol suspendiert. Man gibt zu der Mischung 7,6 Teile Phenol und lässt anschliessend 4,1 Teile Triäthylamin zutropfen. Nach 1 stündigem Nachrühren bei 25 bis 30° wird mit 400 Teilen Methanol verdünnt. Der Farbstoff wird abgesaugt, mit Methanol gewaschen und bei 50° im Umluftschrank getrocknet. Er entspricht der Formel 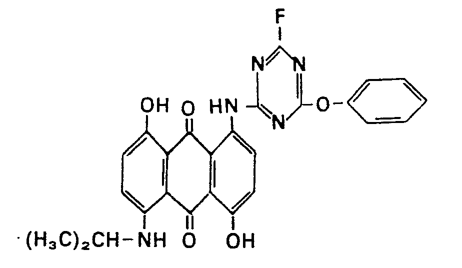 und gibt nach den Verfahren der Beispiele 3 und 4 auf Polyester/Baumwoll-Mischfasern kräftige tongleiche und echte Blaufärbungen.

### Beispiel 1

10,0 Teile 1-Amino-2-[β-(4'-aminophenoxy)-äthoxy] -4-hydroxyanthrachinon werden in 70Teilen Dimethylformamid gelöst. Man lässt bei 0 bis 5° 3,8 Teile 2,4,6-Trifluortriazin in 10 min zutropfen und rührt 30 min nach, bis die Umsetzung beendet ist. Anschliessend setzt man 3,0 Teile Phenol zum Reaktionsgemisch, lässt 6,3 Teile Triäthylamin in 15 bis 30 min zutropfen und anschliessend die Temperatur auf 20° ansteigen. Man rührt 4 h nach und fällt aus der Lösung den Farbstoff durch Zutropfen einer Mischung von 100 Teilen Isopropanol und 100 Teilen Wasser aus. Man saugt den Niederschlag ab und wäscht ihn mit Wasser/lsopropanol-Mischung im Volumenverhältnis 1:1. Nach Trocknung im Umluftschrank bei 50 bis 60° erhält man den Farbstoff der Formel 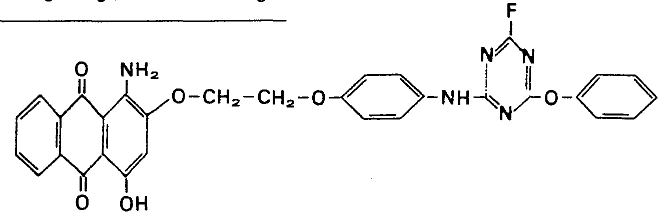 der nach den Verfahren der Beispiele 3 und 4 auf Polyester/Baumwoll-Mischgeweben gleichmässige rote Färbungen mit guten Echtheiten ergibt.

### Beispiel 12

33 Teile 1,4-Diamino-2-phenoxyanthrachinon werden in 300 Teile Nitrobenzol und 60 Teile Dimethylformamid eingetragen. Man lässt 14,2 Teile 2,4,6-Trifluortriazin in 15 min zutropfen und erwärmt auf 30 bis 35°. Nach halbstündigem Nachrühren heizt man die Mischung noch 30 min auf 55 bis 60°, kühlt auf 20° ab, verdünnt dann mit 400 Teilen Methanol, saugt die Fällung ab und wäscht den Filterkuchen mit Methanol. Er wird bei 50° im Umluftschrank getrocknet.

31 Teile des erhaltenen Zwischenproduktes werden in 300 Teile Nitrobenzol eingetragen. Man setzt 13,0 Teile Phenol zu und lässt in die Mischung 7,1 Teile Triäthylamin bei 25 bis 30° einlaufen. Man rührt 1½ bei dieser Temperatur nach und erwärmt dann noch 15 min auf 60°, bis die Kondensation abgeschlossen ist. Nun tropft man zu der Mischung 500 Teile Methanol, kühlt auf 20° ab, saugt die erhaltenen Kristalle ab, wäscht sie mit Methanol und trocknet bei 50° im Umluftschrank. Der Farbstoff der Formel 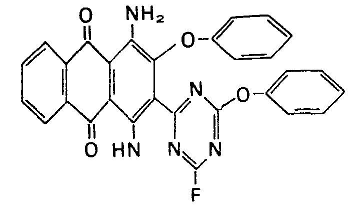 gibt nach den Verfahren der Beispiele 3 und 4 auf Polyester/Baumwoll-Mischgeweben tongleiche, echte Rotviolettfärbungen.

### Beispiel 13

10,5 Teile 5-Amino-1,4-bis-phenylthioanthra- chinon werden in 50 Teilen Nitrobenzol und 3,8 Teilen N,N-Dimethylanilin suspendiert. Man lässt in 5 min bei 25° 4,1 Teile 2,4,6-Trifluortriazin zutropfen und rührt 2 h nach. Es bilden sich rote Nadeln. Man gibt zu der Suspension 3,8 Teite Phenol und lässt dann 3,7 Teile Triäthylamin innerhalb von 30 min zutropfen. Nach 1 h ist die Reaktion beendet, es ist eine klare Lösung entstanden. Die erhaltene Lösung wird in 1000 Teile Isopropanol eingetropft, der gefällte Farbstoff abgesaugt, mit Isopropanol gewaschen und bei 50° im Umluftschrank getrocknet. Der erhaltene Farbstoff der Formel 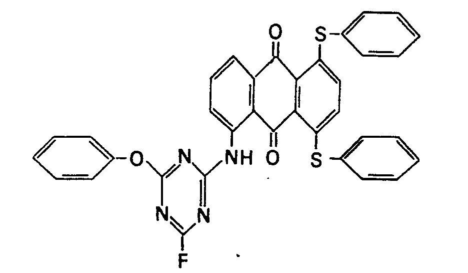 färbt Polyester/Baumwoll-Mischgewebe nach den Verfahren der Beispiele 3 und 4 in gleichmässigen Scharlachtönen mit guten Echtheiten.

Analog zu den bisherigen Beispielen lassen sich die in Tabelle I genannten, weiteren Farbstoffe herstellen, die nach der Verfahrensweise der Beispiele 3 und 4 absolut waschechte Färbungen bzw. Drucke mit den angegebenen Nuancen liefern.

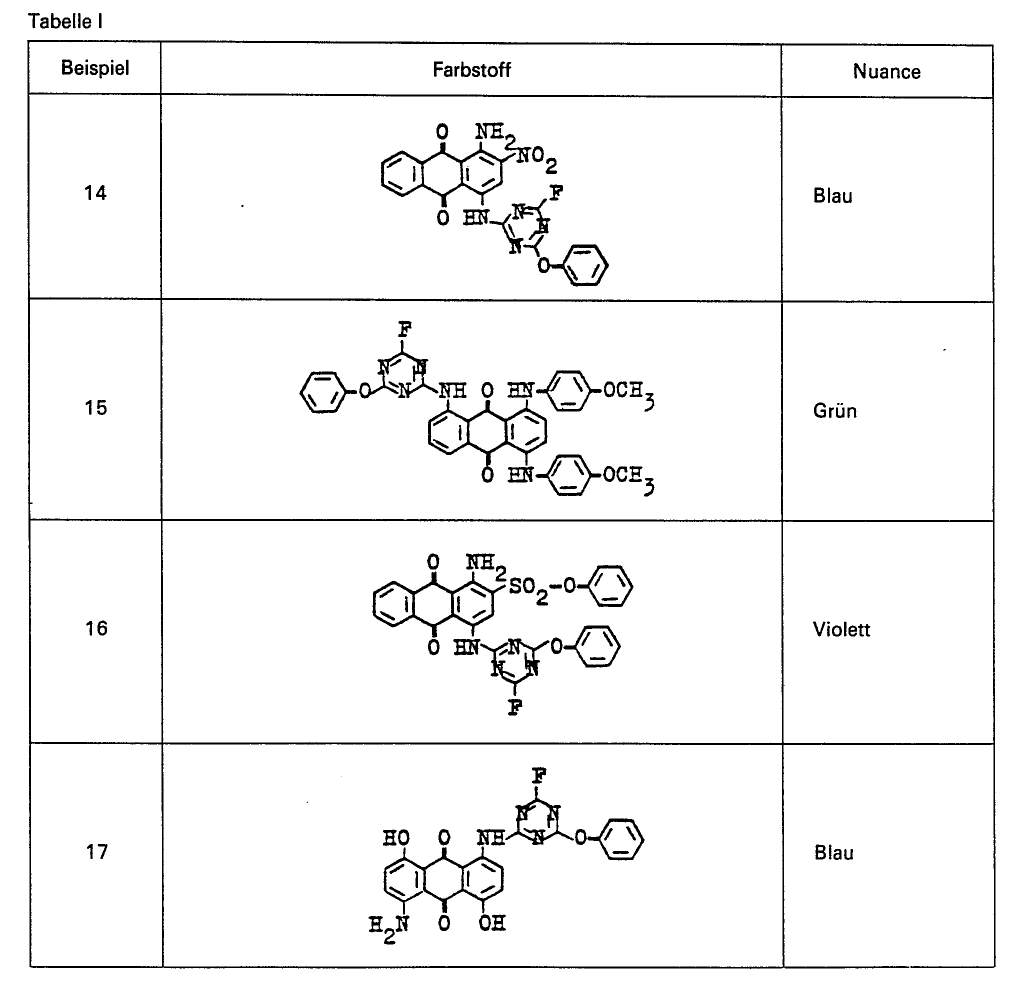

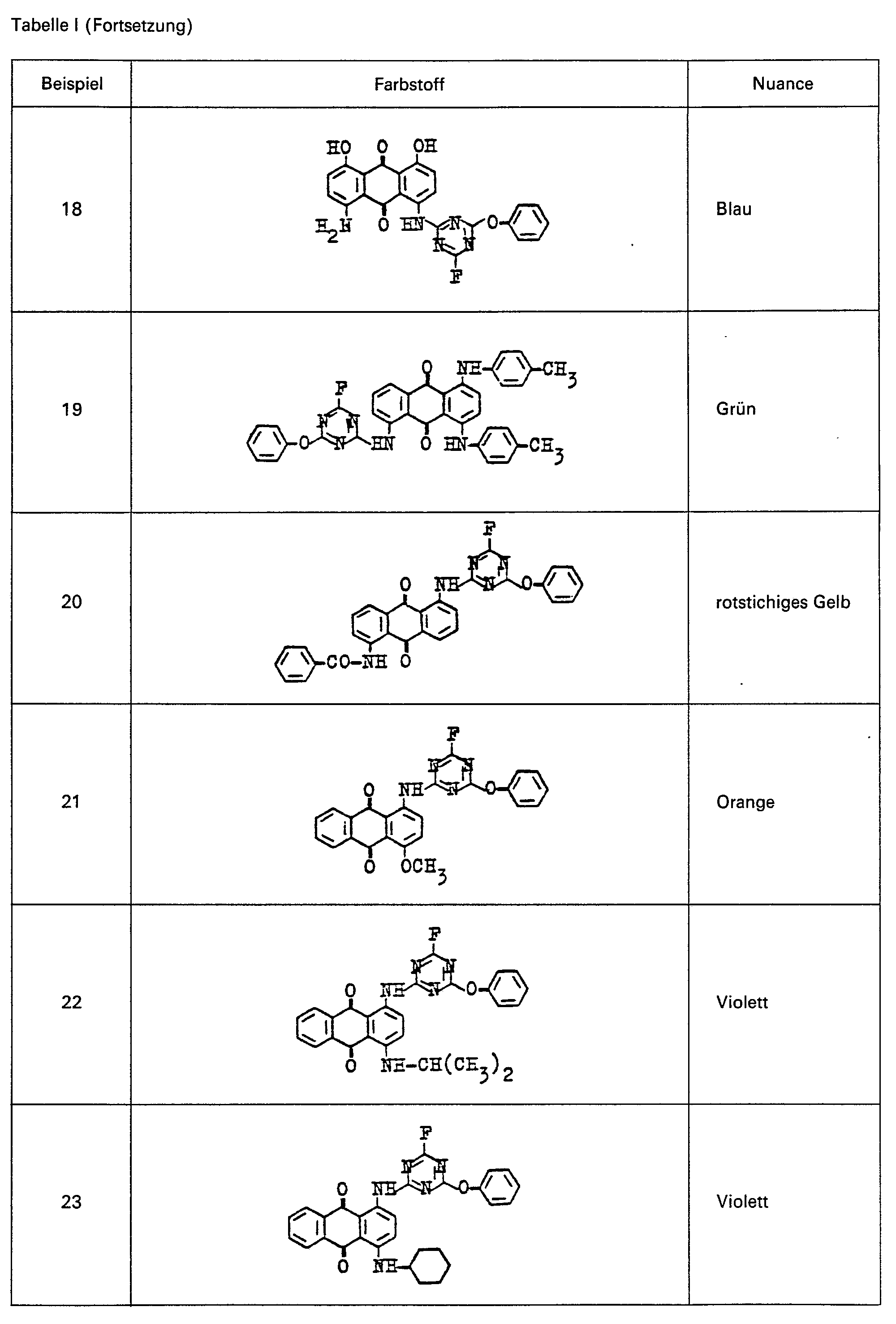

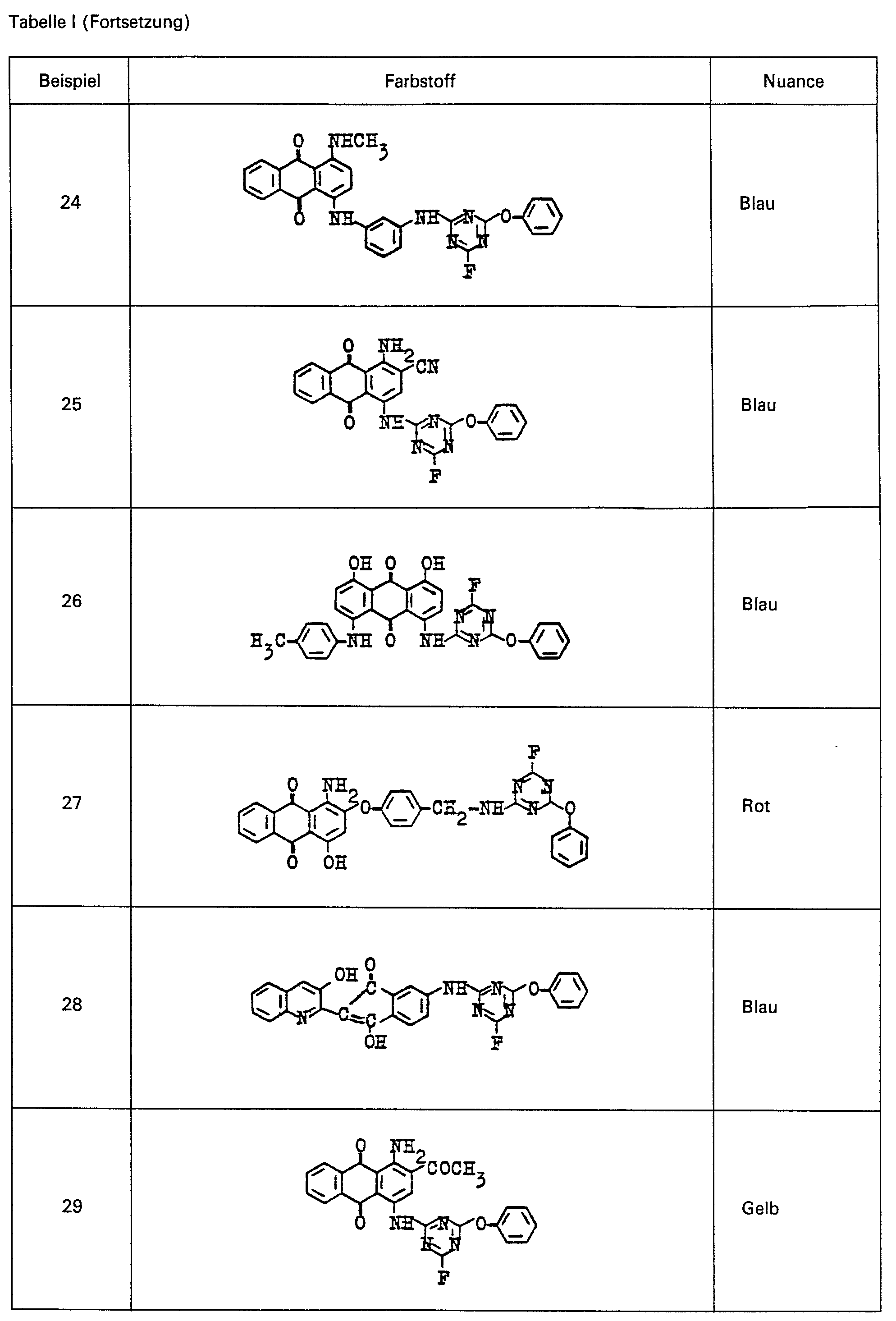

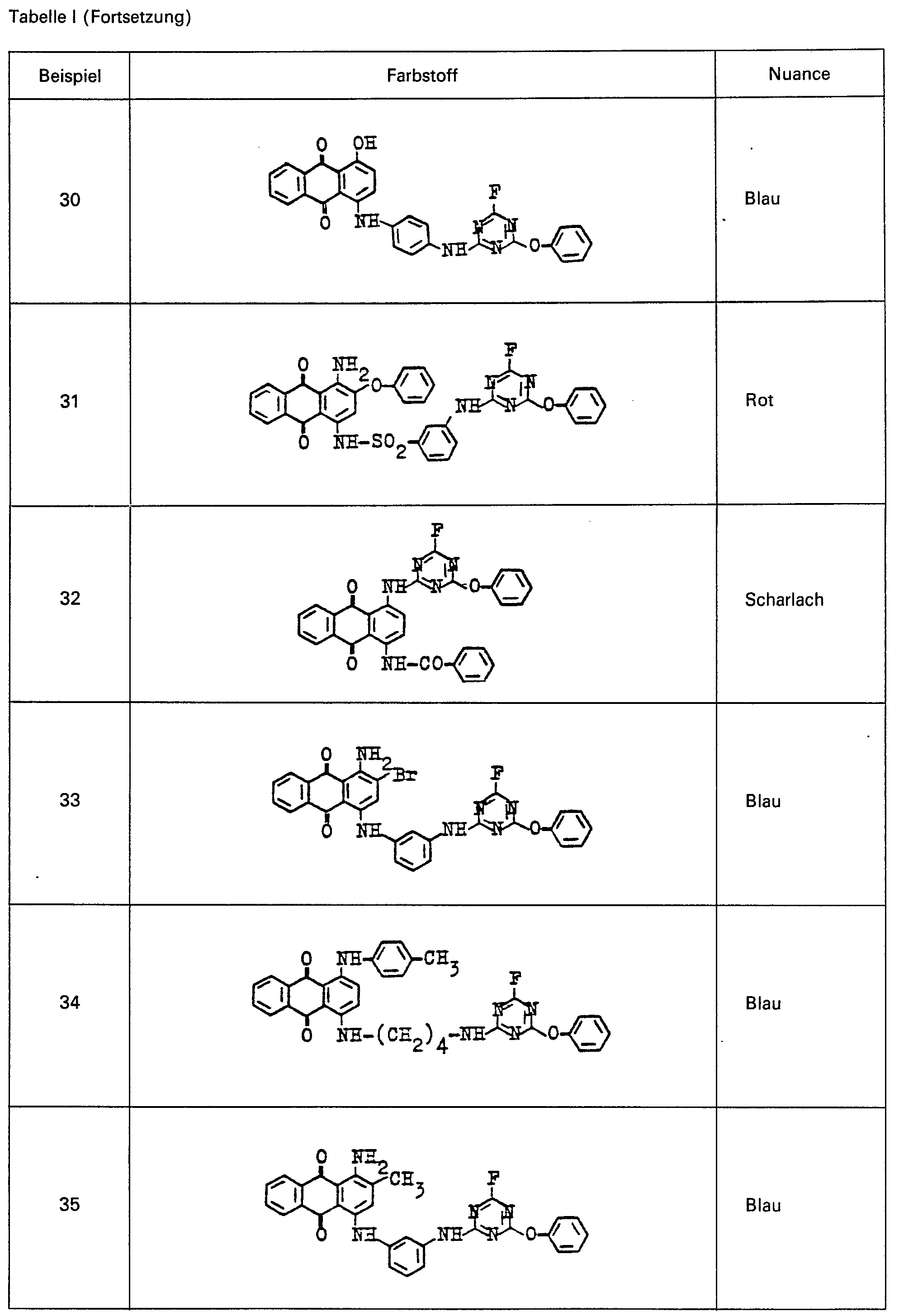

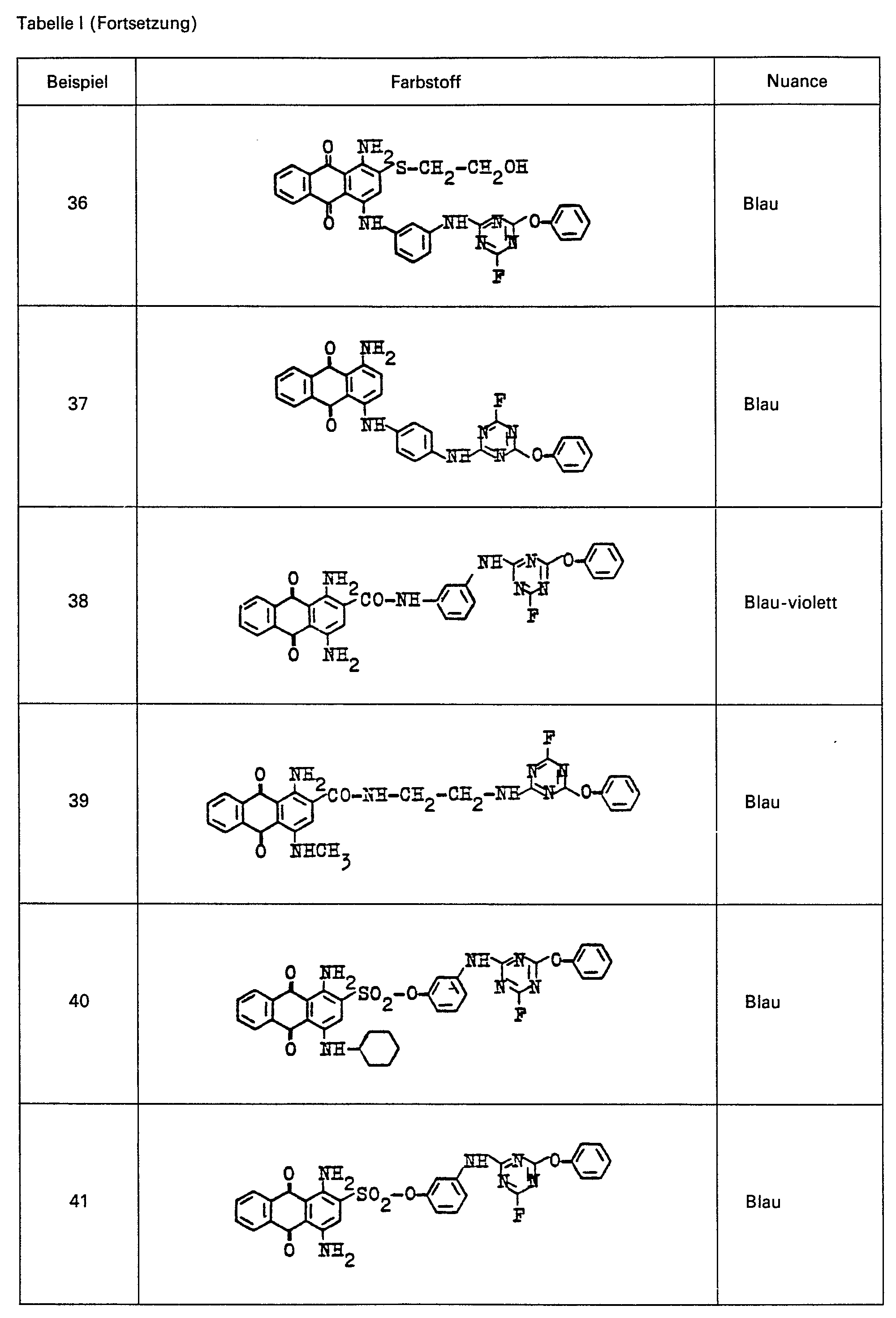

### Beispiel 42

Verwendet man eine Mischung von
20 g/I des Gelbs aus Beispiel 5
5 g/I des Orange aus Beispiel 8
10 g/I des Blaus aus Beispiel 9

und verfährt im übrigen, wie in den Beispielen 3 und 4 beschrieben, so erhält man eine braune Färbung bzw. einen braunen Druck mit ausgezeichneten Echtheiten.

### Beispiel 43

16 Teile 4-Amino-2'-hydroxy-5'-methylazobenzol werden in 60 Teilen Aceton und 20 Teilen Dimethylformamid suspendiert. Man lässt 10,1 Teile 2,4,6-Trifluortriazin in 5 min bei 20 bis 25° zutropfen und rührt 30 min nach. Zum Reaktionsgemisch werden 7,4 Teile Phenol gegeben. Anschliessend lässt man innerhalb von 30 min 8 Teile Triäthylamin zutropfen und rührt zur Beendigung der Kondensation noch 3 h nach. Die erhaltene Lösung wird in Eis/Wasser eingegossen und die entstandene Suspension zur Verfestigung noch einige Zeit nachgerührt. Man saugt den Farbstoff ab, wäscht ihn mit Wasser und trocknet ihn bei 50° im Vakuum.

Er entspricht der Formel 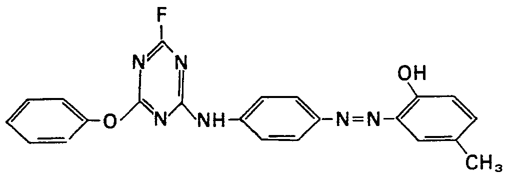 und färbt Polyester/Baumwoll-Mischfasern in nassechten, gleichmässigen Gelbtönen nach den Verfahren der Beispiele 3 und 4.

### Beispiel 44

14 Teile 1-(4'-Amino-2'-nitrophenylazo)-2-hydroxynaphthalin werden in 90 Teilen Nitrobenzol und 6,3 Teilen N,N-Dimethylanilin suspendiert. Man lässt 7 Teile 2,4,6-Triffuortriazin in 5 min zutropfen, rührt 1 h bei 20 bis 25° nach und erwärmt dann etwa 1 h auf 45 bis 50°, bis die Umsetzung zwischen Azofarbstoff und Cyanurfluorid beendet ist. Nach Abkühlung auf 20° werden 5,1 Teile Phenol zum Reaktionsgemisch zugefügt. Man lässt in 30 min 5,5 Teile Triäthylamin bei 25° zutropfen und erwärmt nach weiteren 30 min innerhalb 1 h auf 50°. Bei dieser Temperatur rührt man 5 h zur Beendigung der Kondensation nach. Nach Abkühlung auf 20° lässt man 150 Teile Isopropanol zulaufen, saugt den Niederschlag ab und wäscht ihn mit Isopropanol. Der erhaltene Farbstoff der Formel 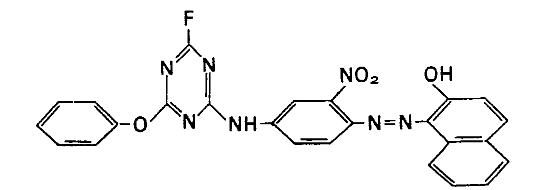 wird bei 50° im Umluftschrank getrocknet. Mit ihm lassen sich nach den Verfahren der Beispiele 3 und 4 Polyester/Baumwoll-Mischgewebe in gleichmässigen, scharlachroten Tönen nassecht färben bzw. bedrucken.

Analog zu den obigen Beispielen können weitere, in Tabelle II aufgeführte Azofarbstoffe hergestellt werden, die auf Polyester/Baumwoll-Mischfasern mit der Verfahrensweise der Beispiele 3 und 4 waschechte, gleichmässige Färbungen und Drucke in den angegebenen Nuancen ergeben.

(Tabelle auf der nächsten Seite)

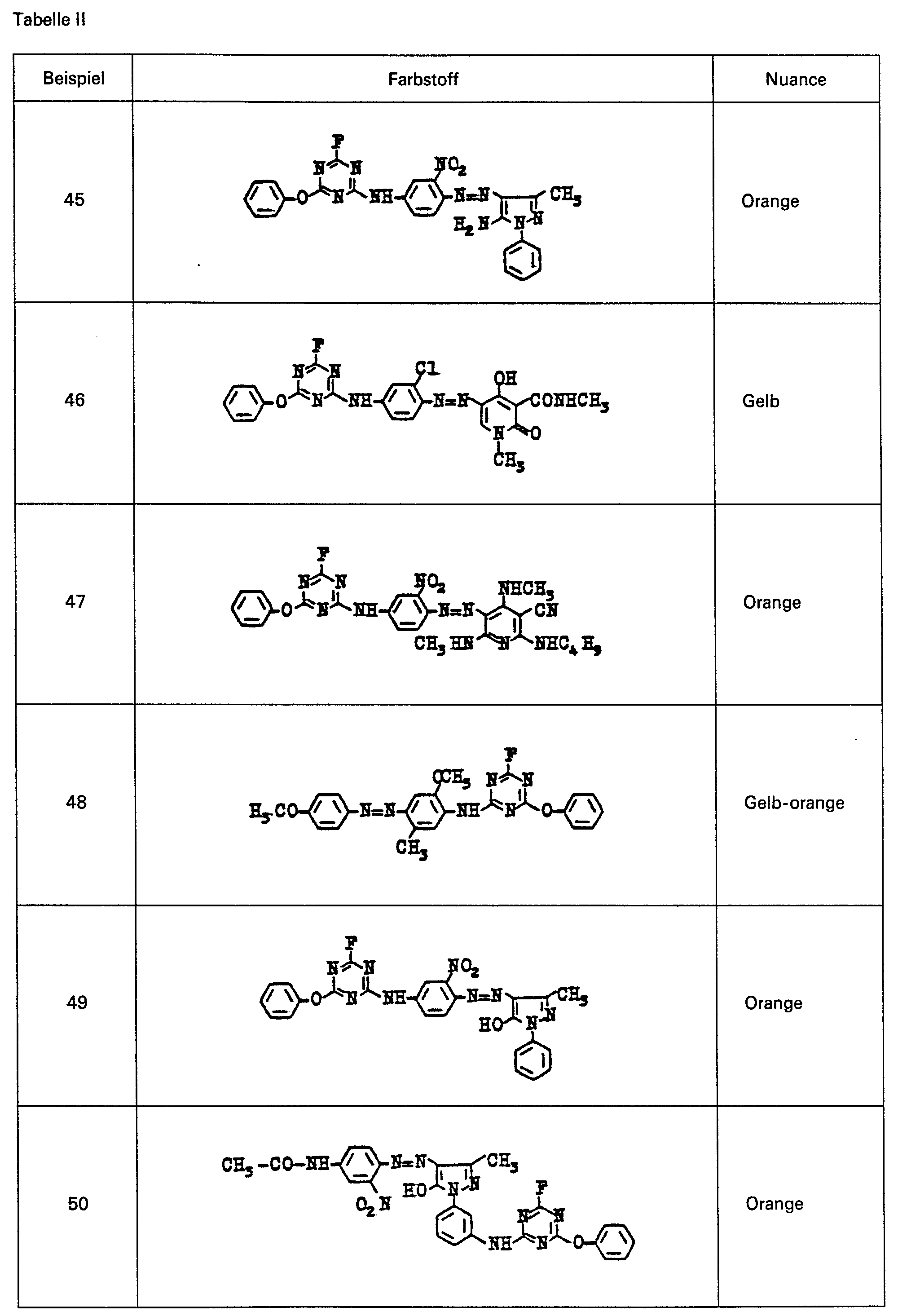

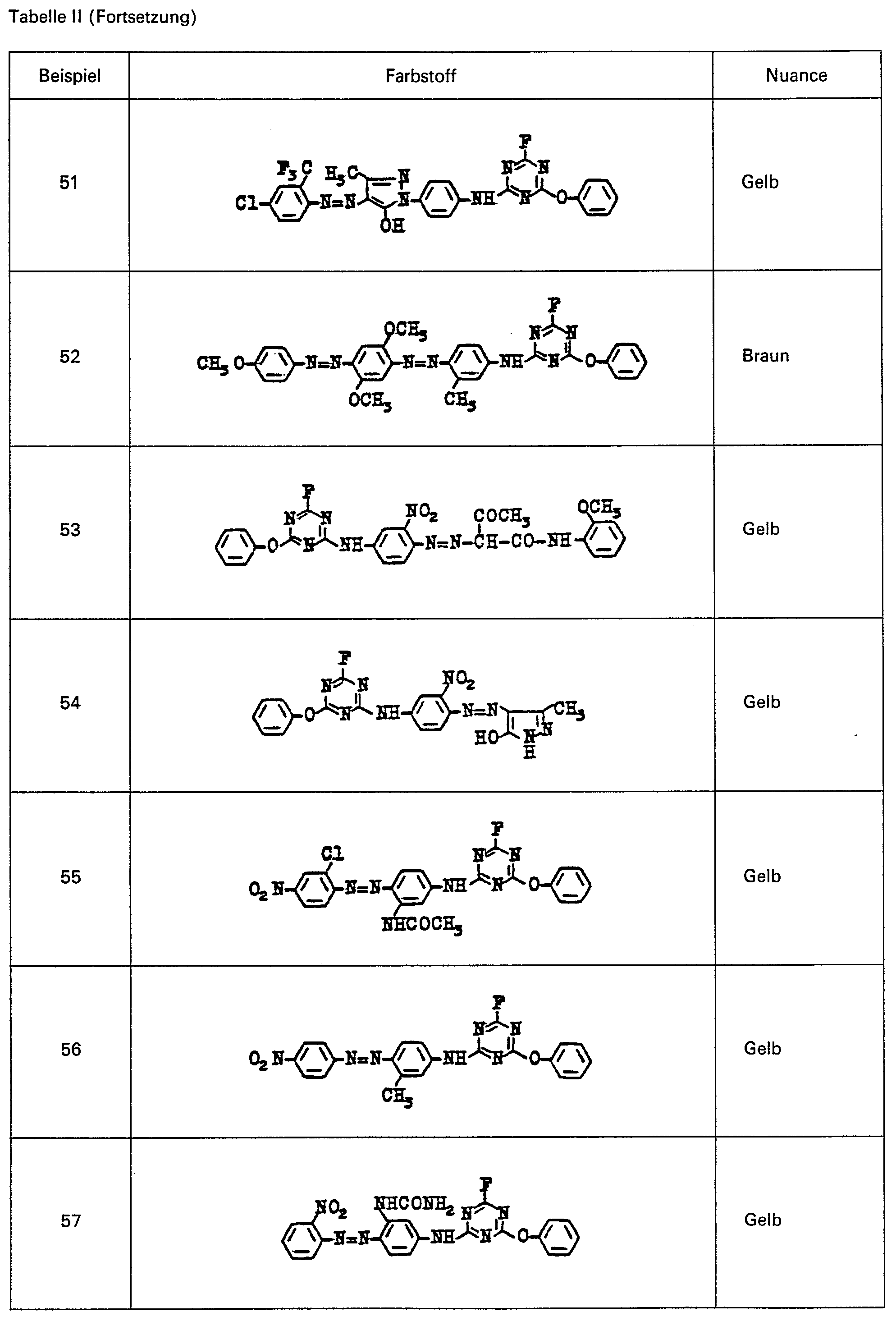

### Beispiel 58

Zu einer Lösung von 14,3 Teilen 2,4,6-Trifluortriazin in 40 Teilen Aceton wird bei -5 bis 0° eine Lösung von 13,6 Teilen 3-Amino-N,N-dimethylanilin in 40 Teilen Aceton gelöst innerhalb von 30 min zugetropft. Man rührt die Kristallsuspension 15 min nach, worauf die Kondensation beendet ist. 11,4 Teile Phenol werden zugesetzt. Dann lässt man 12,2 Teile Triäthylamin bei 20° im Laufe von 30 min zutropfen und rührt mehrere Stunden weiter, bis ein Chromatogramm kein Difluorarylaminotriazin mehr anzeigt. Man giesst die erhaltene Lösung in 500 ml Eis/Wasser und rührt 30 min nach. Dann setzt man die Suspension eines Diazoniumsalzes hinzu, die durch Diazotieren von 13,8 Teilen 4-Nitroanilin in 200 Teilen Wasser und 30 Teilen konz. Salzsäure mit 6,9 Teilen Natriumnitrit in 100 Teilen Wasser erhalten wurde. Während der Zugabe des Diazoniumsalzes hält man den pH-Wert im Kupplungsgemisch mit Sodalösung auf 4,5 bis 5,5. Man lässt nach 2stündigem Nachrühren die Temperatur allmählich auf 20° ansteigen und hält den pH-Wert auf 6 bis 6,5. Nach beendeter Kupplung saugt man den rotbraunen Niederschlag ab, wäscht ihn mit Wasser und trocknet ihn im Umluftschrank bei 50°. Der erhaltene Farbstoff entspricht der Formel

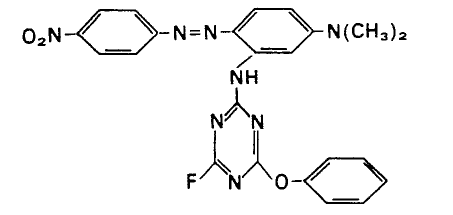

Er färbt Polyester/Baumwoll-Mischgewebe gemäss den Beispielen 3 und 4 in gleichmässigen roten Farbtönen.

In analoger Verfahrensweise lassen sich die in Tabelle 111 zusammengestellten Azofarbstoffe herstellen, die nach den Methoden der Beispiele 3. und 4 auf Polyester/Baumwoll-Mischfasern tongleiche, waschechte Färbungen und Drucke der angegebenen Nuancen liefern.

### (Tabelle auf der nächsten Seite)

### Beispiel 66

14 Teile 4'-Amino-2-nitrodiphenylamin-4-sulfonsäure-N,N-dimethylamid werden in 60 Teilen Dimethylformamid gelöst. Man lässt bei 0 bis 5° 6,2 Teile 2,4,6-Trifluortriazin in 5 min zutropfen und rührt noch 15 min weiter. Man erwärmt die Lösung auf 20°, setzt 5,2 Teile Phenol hinzu und lässt anschliessend im Laufe von 30 min 5,6 Teile Triäthylamin zutropfen. Wenn die Umsetzung nach etwa 4 h abgeschlossen ist, tropft man die erhaltene Lösung bei 0 bis 5° in eine Mischung von 300 Teilen Wasser und 240 Teilen Methanol ein, saugt die entstandene Fällung ab und wäscht den Kuchen mit wenig Wasser/Methanol-Mischung und anschliessend mit Wasser. Man trocknet den erhaltenen Farbstoff der Formel 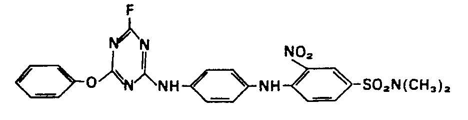 bei 50° im Umluftschrank. Er färbt nach den Verfahren der Beispiele 3 und 4 Polyester/Baumwoll Mischgewebe gleichmässig in nassechten Gelbtönen.

In gleicher Weise lassen sich mit den in Tabelle IV aufgeführten, analog hergestellten Nitrofarbstoffen tongleiche gelbe Färbungen und Drucke auf Polyester/Baumwoll-Mischungen nach den in den Beispielen 3 und 4 angegebenen Verfahren erzielen.

### (Tabelle auf der nächsten Seite)

### Beispiel 73

12,0 Teile 4-Amino-4'-methoxy-2-methylazobenzol werden in 80 Teilen Toluol und 6,7 Teilen N,N-dimethylanilin suspendiert. Man lässt 7,4 Teile 2,4,6-Trifluortriazin in 5 min zutropfen und rührt insgesamt 2 h bei 20 bis 30° nach. Sodann werden 5,6 Teile Phenol eingetragen. Anschliessend tropft man in 30 min 6,1 Teile Triäthylamin zu der Suspension. Man hält 2 h auf 20 bis 30° und steigert dann die Temperatur auf 50°. Man kühlt nach beendeter Umsetzung auf 20° ab, saugt den ausgefallenen Farbstoff ab und wäscht ihn mit kaltem Toluol.

Nach Trocknung im Umluftschrank erhält man ein Produkt der Formel 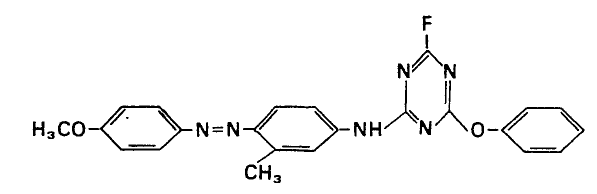 das auf Polyester/Baumwoll-Mischfasern nach den Verfahren der Beispiele 3 und 4 gleichmässige, nassechte, gelbe Färbungen und Drucke liefert.

### Beispiel 74

16,OTeile1-Amino-4-(3'-aminophenylamino)-anthrachinon werden in 70 Teile Dimethylformamid eingetragen. Nach Abkühlung auf 0 bis 5°

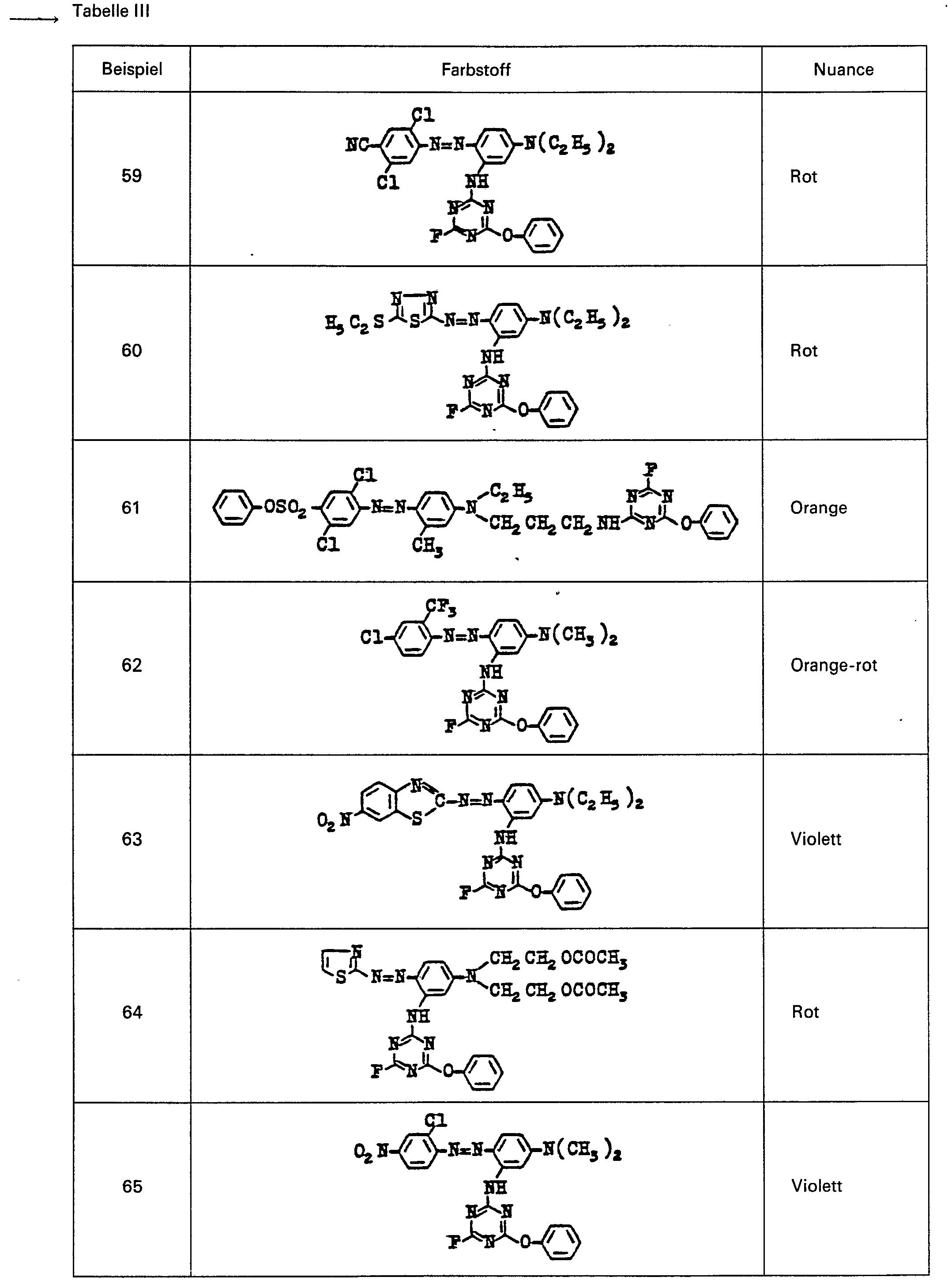

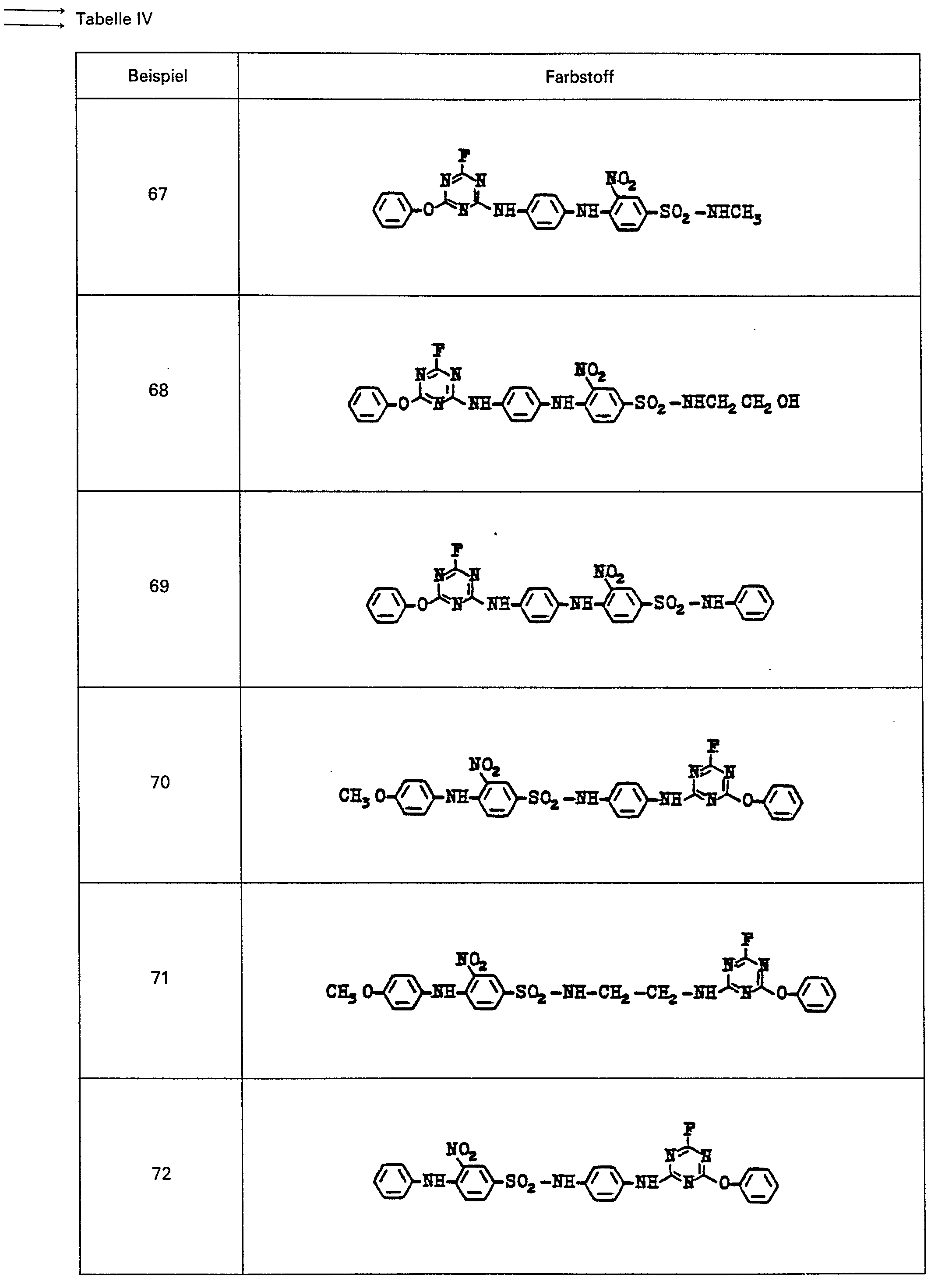

lässt man 7 Teile 2,4,6-Trifluortriazin in 5 min zutropfen. 15 min nach Eintropfen zeigt eine chromatographische Probe das Ende der Umsetzung an. Man erwärmt die Suspension auf 20°, setzt 5,0 Teile Phenol zu und tropft dann 5,4 Teile Triäthylamin im Laufe von 30 min ein. Man rührt 5 h nach, wobei im Laufe der Umsetzung zunehmend Lösung des suspendierten Difluortriazinyl-Zwischenproduktes eintritt. Nach beendeter Kondensation lässt man zu der Lösung eine Mischung aus 80 Teilen Wasser und 65 Teilen Methanol langsam zulaufen, saugt das ausgefällte Produkt ab und wäscht den Filterkuchen mit obiger Wasser/Methanol-Mischung. Nach Trocknung im Umluftschrank bei 50° erhält man einen Farbstoff der Formel 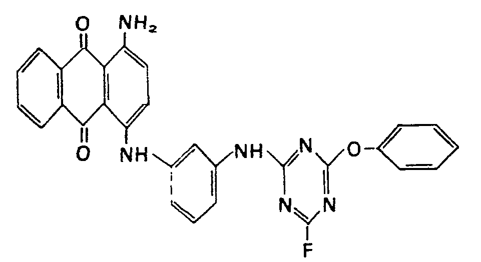 der Polyester/Baumwoll-Mischfasern nach den Verfahren der Beispiele 3 und 4 in nassechten, rotstichigen Blautönen gleichmässig färbt bzw. druckt.

## Patentansprüche

1. Verwendung eines von wasserlöslich machenden Gruppen freien Reaktivfarbstoffes der Formel 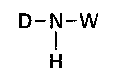 worin 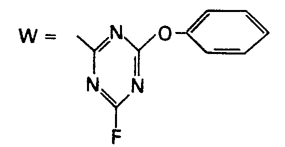
D = Rest eines organischen Farbstoffs, wobei der Rest 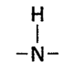 direkt oder über ein Brückenglied an ein Ring-C-Atom von D gebunden ist,
zum Färben und Bedrucken von Mischgeweben aus Polyester/Baumwolle.

2. Verwendung gemäss Anspruch 1, dadurch gekennzeichnet, dass es sich bei dem Reaktivfarbstoff um einen Farbstoff der Formel 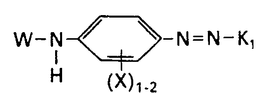 oder 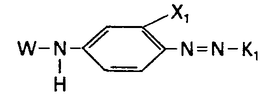 handelt, mit
X = Substituent oder H,
X₁ = H, NO₂, Halogen, insbesondere CI oder Br,
CN, 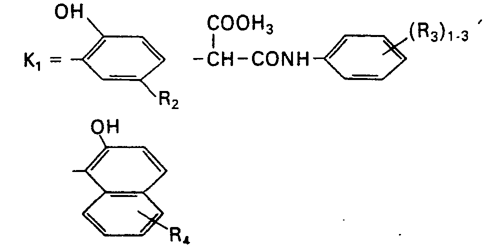 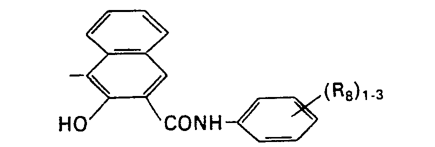 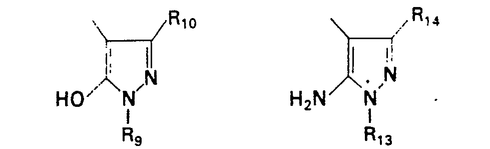 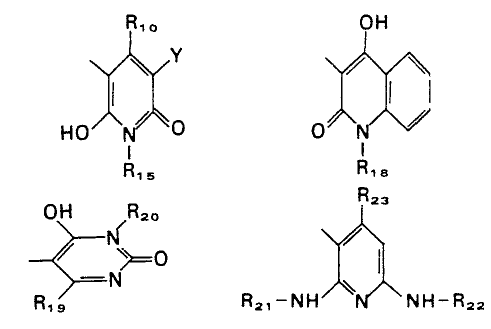 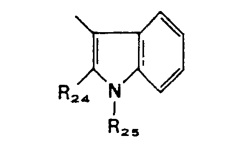 mit folgenden Substituentenbedeutungen:
R₂ = Alkyl, Phenyl, Cyclohexyl,
R₃ = H, Alkyl, Alkoxy, Halogen, insbesondere CI,
R₄ = H, Sulfonamido, insbesondere 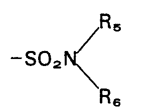 mit
R₅, R₆ = H, Alkyl, Aralkyl, Aryl oder Carbonestergruppe, insbesondere -COOR₇ mit
R₇ = Alkyl, Aralkyl,
R₈ = H, Alkyl, Alkoxy, Halogen, insbesondere Cl, R₉ = H, Alkyl, Aryl,
R₁₀ = Alkyl, insbesondere CH₃; Carbonester, insbesondere -COO-Alkyl, Carbonamido, insbesondere 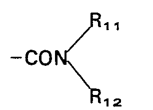 CN,
R₁₁, R₁₂ = H, Alkyl, Aralkyl,
R₁₃ = H, Alkyl, Aralkyl, Aryl,
R₁₄ = H, Alkoxy oder R₁₀,
R₁₅ = H, Alkyl,
R₁₆ = H, OH, Alkyl, insbesondere CH₃,
Y = CN, Carbonamido, insbesondere CONHR₁₇, R₁₇ = H, Alkyl, Aryl,
R₁₈= H, Alkyl,
R₁₉ = OH, NH₂,
R₂₀ = Alkyl, Aryl,
R₂₁ = H, Alkyl,
R₂₂ = Alkyl, Aralkyl,
R₂₃ = H, Alkyl oder -NHR₂₂,
R₂₄, R₂₅ = H, Alkyl, Aryl,
und W die in Anspruch 1 angegebene Bedeutung besitzt.

3. Verwendung gemäss Anspruch 1, dadurch gekennzeichnet, dass es sich bei dem Reaktivfarbstoff um einen Farbstoff der Formel 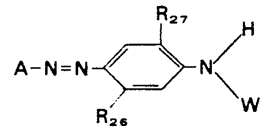
handelt, worin
A = Rest einer Diazokomponente,
R₂₆ = H, Alkyl, Alkoxy, Halogen, insbesondere CI, Acylamino,
R₂₇ = H, Alkyl, Alkoxy, Halogen, insbesondere Cl, und W die in Anspruch 1 angegebene Bedeutung besitzt.

4. Verwendung gemäss Anspruch 1, dadurch gekennzeichnet, dass es sich bei dem Reaktivfarbstoff um einen Farbstoff einer der folgenden Formeln a bis i handelt: 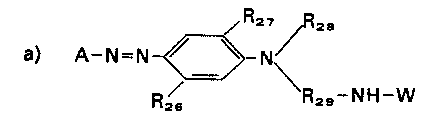 worin R₂₆ und R₂₇ die in Anspruch 3 angegebene Bedeutung besitzen,
R₂₈ = H, Alkyl, Aralkyl,
R₂₉ = Brückenglied, insbesondere C₂ bis C₆-Alkylen und -CH₂-CH₂, 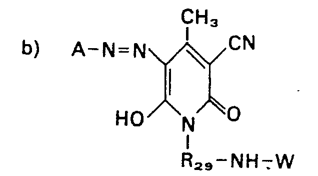 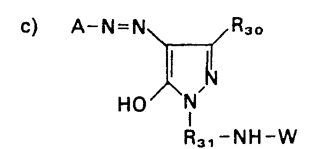 worin
R₂₉ = Brückenglied, insbesonderer C₂ bis C₆-Alkylen
R₃₀ = Alkyl, insbesondere CH₃, Carbonester, insbesondere COO-Alkyl, Carbonamido, insbesondere 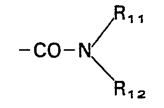 wobei R₁₁ und R₁₂die in Anspruch 2 angegebene Bedeutung besitzen, und
R₃₁ = Arylen, Alkylen, insbesondere C₂ bis C₆-Alkylen, 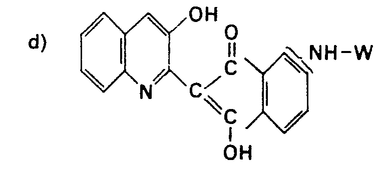 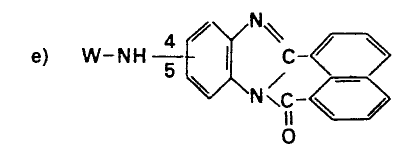 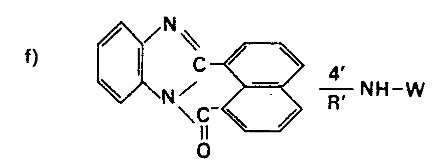 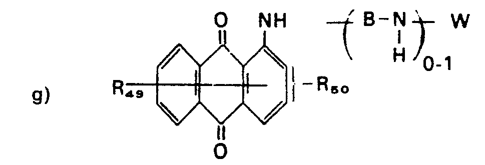 worin R₄₉ vorzugsweise in 4- oder 5-Stellung steht, und
R₄₉ = H, NH₂, Alkylcarbonylamino, Arylcarbonylamino, Alkylamino, Cycloalkylamino, Arylamino, OH, Alkoxy, Arylthio, Nitro,
R₅₀ = H, Alkoxy, Aryloxy, Nitro, Halogen, Cyan, Alkylsulfonyl, Arylsulfonyl, Alkylcarbonyl, Arylcarbonyl, Alkoxycarbonyl, Alkoxysulfonyl, Aralkoxysulfonyl, Aryloxysulfonyl,
B = Brückenglied, vorzugsweise Alkylen oder Arylen, 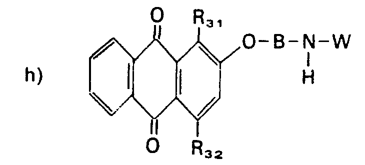 worin
R₅₁ = NH₂, OH,
R_{32 =} NH₂, Alkylamino, Cycloalkylamino, Aralkylamino, Arylamino, OH, Alkylsulfonylamino, Aralkylsulfonylamino, Arylsulfonylamino, Alkylcarbonylamino, Aralkylcarbonylamino, Arylcarbonylamino,
B = Brückenglied, vorzugsweise Alkylen oder Arylen, 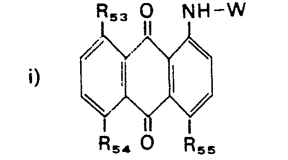 worin
R₅₃ bis R₅₅ = H, OH, NH₂, Alkylamino, Arylamino, Arylthio.

## Claims

1. Use of a reactive dyestuff, which is free from groups conferring solubility in water, of the formula 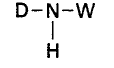 wherein 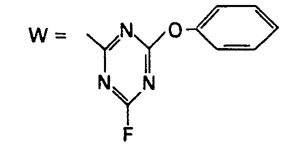
D denotes the radical of an organic dyestuff, wherein
the radical 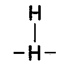
is bonded, directly or via a bridge member, to a ring
C atom of D, for dyeing and printing polyester/cotton mixed fabrics.

2. Use according to claim 1, characterized in that the reactive dyestuff is a dyestuff of the formula 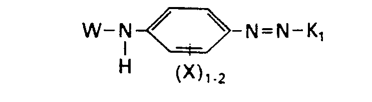 or 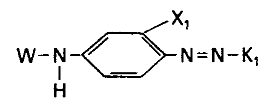 wherein
X denotes a substituent or H;
X₁ denotes H, NO₂, halogen, in particular CI or Br, or CN 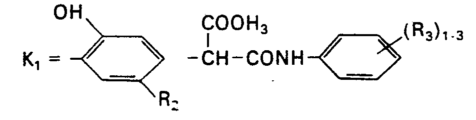 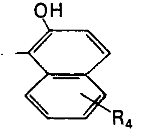 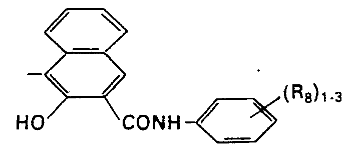 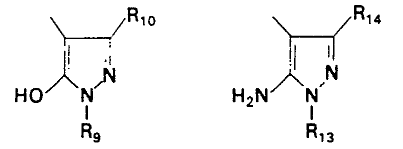 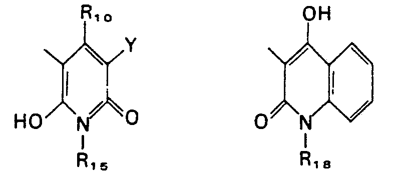 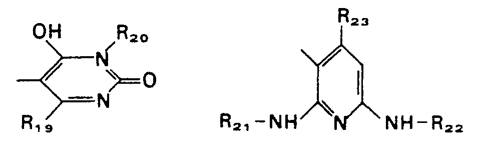 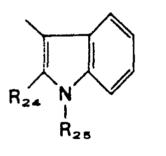 with the following meanings for the substituents: R₂ denotes alkyl, phenyl or cyclohexyl,
R₃ denotes H, alkyl, alkoxy or halogen, in particular Cl,
R₄ denotes H or sulphonamido, in particular 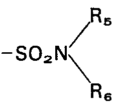 in which
R₆ and R₆ denote H, alkyl, aralkyl, aryl or a carboxylic acid ester group, in particular -COOR₇, in which
R₇ denotes alkyl or aralkyl,
R₈ denotes H, alkyl, alkoxy or halogen, in particular Cl,
R₉ denotes H, alkyl or aryl,
R₁₀ denotes alkyl, in particular CH₃, carboxylic acid ester, in particular -COO-alkyl, carboxamido, in particular 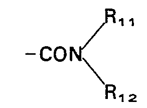 orCN,
wherein
R₁₁ and R₁₂ denote H, alkyl or aralkyl,
R₁₃ denotes H, alkyl, aralkyl or aryl,
R₁₄ denotes H, alkoxy or R₁₀,
R₁₅ denotes H or alkyl,
R₁₆ denotes H, OH or alkyl, in particular CH₃,
Y denotes CN or carboxamido, in particular CONHR₁₇,
wherein
R₁₇ denotes H, alkyl or aryl,
R₁₈ denotes H or alkyl,
R₁₉ denotes OH or NH₂,
R₂₀ denotes alkyl or aryl,
R₂₁ denotes H or alkyl,
R₂₂ denotes alkyl or aralkyl,
R₂₃ denotes H, alkyl or -NHR₂₂, and
R₂₄ and R₂₅ denote H, alkyl or aryl, and
W has the meaning indicated in claim 1.

3. Use according to claim 1, characterized in that the reactive dyestuff is a dyestuff of the formula 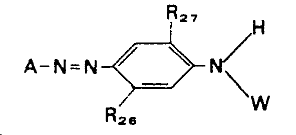 wherein
A denotes the radical of a diazo component,
R₂₆ denotes H, alkyl, alkoxy, halogen, in particular Cl, or acylamino,
R₂₇ denotes H, alkyl, alkoxy or halogen, in particular Cl, and
W has the meaning indicated in claim 1.

4. Use according to claim 1, characterized in that the reactive dyestuff is a dyestuff of the following formulae a to i 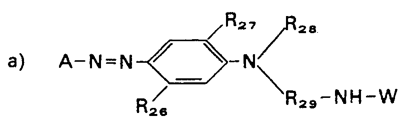 wherein
R₂₆ and R₂₇ have the meaning indicated in claim 3,
R₂₈ denotes H, alkyl or aralkyl,
R₂₉ denotes a bridge member, in particular C₂ to C₆-alkylene and -CH₂-CH₂, 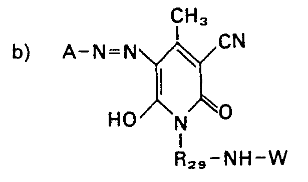 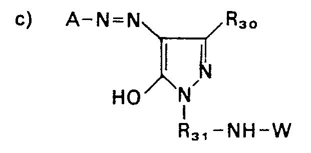 wherein
R₂₉ denotes a bridge member, in particular C₂ to C₆-alkylene
R₃₀ denotes alkyl, in particular CH₃, carboxylic acid ester, in particular COO-alkyl, carboxamido, in particular 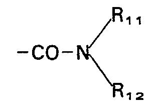 wherein R₁₁ and R₁₂ have the meaning indicated in claim 2 and
R₃₁ denotes arylene or alkylene, in particular C₂ to C₆-alkylene, 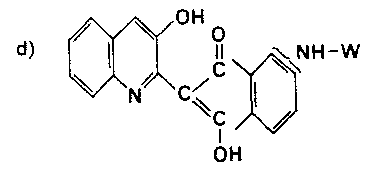 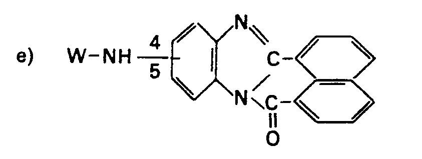 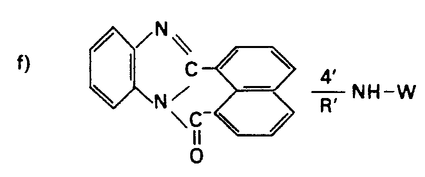 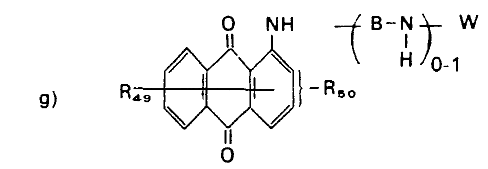 wherein
R₄₉ is preferably in the 4- or 5-position and denotes H, NH₂, alkylcarbonylamino, arylcarbonylamino, alkylamino, cycloalkylamino, arylamino, OH, alkoxy, arylthio or nitro,
R₅₀ denotes H, alkoxy, aryloxy, nitro, halogen, cyano, alkylsulphonyl, arylsulphonyl, alkylcarbonyl, arylcarbonyl, alkoxycarbonyl, alkoxysul- phonyl, aralkoxysulphonyl or aryloxysulphonyl and
B denotes a bridge member, preferably alkylene or arylene, 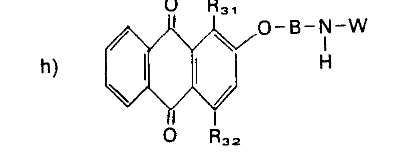 wherein
R₅₁ denotes NH₂ or OH,
R₅₂ denotes NH₂, alkylamino, cycloalkylamino, aralkylamino, arylamino, OH, alkylsulphonylamino, aralkylsulphonylamino, arylsulphonylamino, alkylcarbonylamino, aralkylcarbonylamino or arylcarbonylamino, and
B denotes a bridge member, preferably alkylene or arylene, or 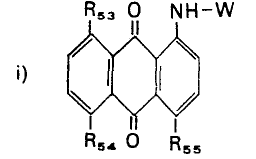 wherein
R₅₃ to R₅₅ denote H, OH, NH₂, alkylamino, arylamino or arylthio.

## Revendications

1. Utilisation d'un colorant réactif, ne comportant pas de groupes de solubilisation dans l'eau, de formule: 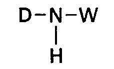 dans laquelle 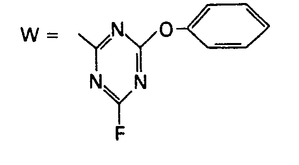 D est le radical d'un colorant organique; et le radical 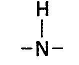 est lié, directement ou par l'intermédiaire d'un terme de pontage, à un atome de carbone cyclique de D, pour teindre et imprimer des étoffes mélangées en polyester/coton.

2. Utilisation selon la revendication 1, caractérisée en ce qu'il s'agit, pour le_{.}colorant réactif, d'un colorant de formule: 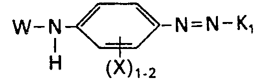 ou 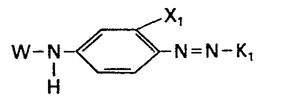 avec
X = substituant ou H,
X₁ = H, NO₂, halogène, notamment CI ou Br, CN, 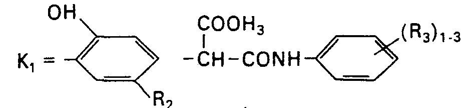 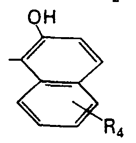 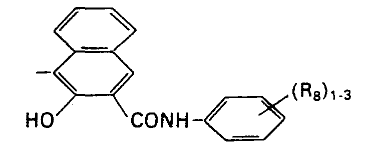 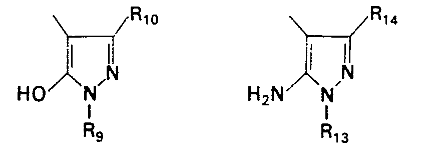 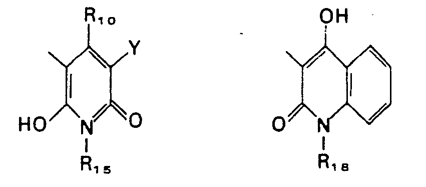 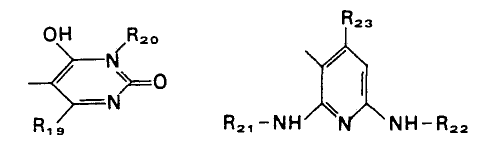 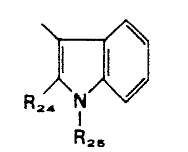 avec les sens suivants des substituants:
R₂ = alkyle, phényle, cyclohexyle,
R₃ = H, alkyle, alcoxy, halogène, notamment CI,
R₄ = H, sulfonamido, notamment 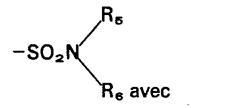
R₅, R₆ = H, alkyle, aralkyle, aryle ou groupe ester d'acide carboxylique, notamment -COOR₇ avec R₇ = alkyle, aralkyle,
R₈ = H, alkyle, alcoxy, halogène, notamment CI, R₉ = H, alkyle, aryle,
R₁₀ = alkyle, notamment CH₃; ester d'acide carboxylique, notamment -COO-alkyle, carboxamido, notamment 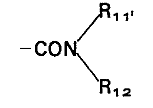 CN,
R₁₁, R₁₂ = H, alkyle, aralkyle,
R₁₃ = H, alkyle, aralkyle, aryle,
R₁₄ = H, alcoxy ou R₁₀,
R₁₅ = H, alkyle,
R₁₆ = H, OH, alkyle, notamment CH₃,
Y = CN, carboxamido, notamment CONHR₁₇, R₁₇ = H, alkyle, aryle,
R₁₈ = H, alkyle,
R_{19 =} OH, NH₂,
R₂₀ = alkyle, aryle,
R₂₁ = H, alkyle,
R₂₂ = alkyle, aralkyle,
R₂₃ = H, alkyle ou -NHR₂₂,
R₂₄, R₂₅ = H, alkyle, aryle, et
W possède le sens indiqué à la revendication 1.

3. Utilisation selon la revendication 1, caractérisée en ce qu'il s'agit, pour le colorant réactif, d'un colorant de formule: 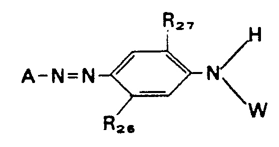 dans laquelle
A = radical d'un composant diazotable,
R₂₆ = H, alkyle, alcoxy, halogène, notamment CI, acylamino,
R₂₇ = H, alkyle, alcoxy, halogène, notamment CI, et
W a le sens indiqué à la revendication 1.

4. Utilisation selon la revendication 1, caractérisée en ce qu'il s'agit, pour le colorant réactif, d'un colorant ayant l'une des formules a à i suivantes: 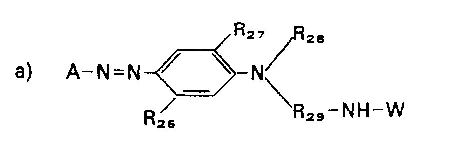 dans laquelle R₂₆ et R₂₇ ont le sens indiqué à la revendication 3,
R₂₈ = H, alkyle, aralkyle,
R₂₉ = terme de pontage, notamment alkylène en C₂-C₆ et -CH₂-CH₂, 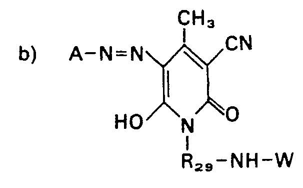 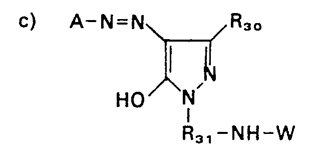 dans laquelle
R₂₉ = terme de pontage, notamment alkylène en C₂-C₆,
R₃₀ = alkyle, notamment CH₃, ester d'acide carboxylique, notamment COO-alkyle, carboxamido, notamment 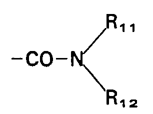 où R₁₁ et R₁₂ ont le sens indiqué à la revendication 2, et
R₃₁ = arylène, alkylène, notamment alkylène en C₂-C₆, 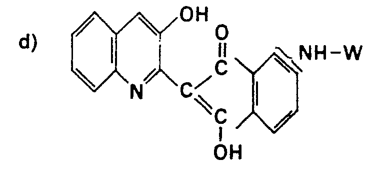 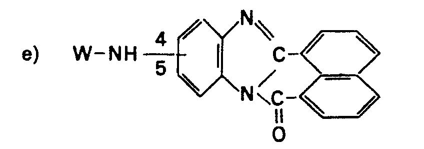 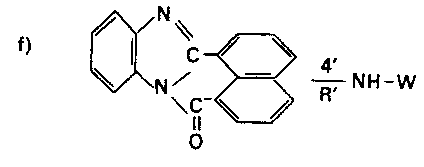 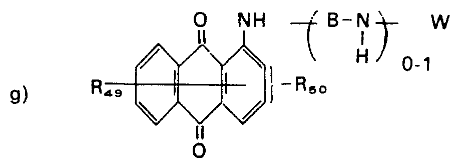 dans laquelle R₄₉ se trouve de préférence en position 4 ou 5, et
R₄₉ = H, NH₂, alkylcarbonylamino, arylcarbonyl- amino, alkylamino, cycloalkylamino, arylamino, OH, alcoxy, arylthio, nitro,
R₅₀ = H, alcoxy, aryloxy, nitro, halogène, cyano, alkylsulfonyle, arylsulfonyle, alkylcarbonyle, aryl- carbonyle, alcoxycarbonyle, alcoxysulfonyle, aral- coxysulfonyle, aryloxysulfonyle,
B = terme de pontage, de préférence alkylène ou arylène 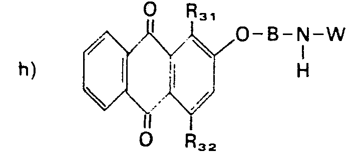 dans laquelle
R₅₁ = NH₂, OH,
R₃₂ = NH₂, alkylamino, cycloalkylamino, aralkylamino, arylamino, OH, alkylsulfonylamino, aralkylsulfonylamino, arylsulfonylamino, alkylcarbonylamino, aralkylcarbonylamino, arylcarbonyl- amino,
B = terme de pontage, de préférence alkylène ou arylène 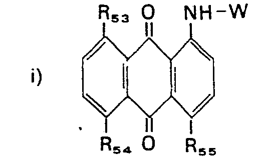 dans laquelle
R₅₃ à R₅₅ = H, OH, NH₂, alkylamino, arylamino, arylthio.
